(19) Europäisches Patentamt

European Patent Office

Office européen des brevets

(11) **EP 1 436 521 B1**

(12) **EUROPÄISCHE PATENTSCHRIFT**

(45) Veröffentlichungstag und Bekanntmachung des Hinweises auf die Patenterteilung:
**19.04.2006 Patentblatt 2006/16**

(21) Anmeldenummer: 02782867.2

(22) Anmeldetag: **09.10.2002**

(51) Int Cl.:
*F16D 65/38* (2006.01)     *F16D 66/02* (2006.01)

(86) Internationale Anmeldenummer:
**PCT/EP2002/011296**

(87) Internationale Veröffentlichungsnummer:
**WO 2003/033931 (24.04.2003 Gazette 2003/17)**

(54) **STEUERUNGSVERFAHREN ZUM NACHSTELLEN EINER SCHEIBENBREMSE**

CONTROL METHOD FOR ADJUSTING A DISK BRAKE

PROCEDE DE COMMANDE POUR REGLER UN FREIN A DISQUE

(84) Benannte Vertragsstaaten:
**AT BE BG CH CY CZ DE DK EE ES FI FR GB GR IE IT LI LU MC NL PT SE SK TR**

(30) Priorität: **10.10.2001 DE 10150047**

(43) Veröffentlichungstag der Anmeldung:
**14.07.2004 Patentblatt 2004/29**

(73) Patentinhaber: **KNORR-BREMSE SYSTEME FÜR NUTZFAHRZEUGE GMBH
80809 München (DE)**

(72) Erfinder:
• **BAUMGARTNER, Johann
  85368 Moosburg (DE)**
• **SIEBKE, Alf
  86938 Schondorf (DE)**

(56) Entgegenhaltungen:
EP-A- 0 874 174     WO-A-99/05428
DE-A- 4 316 993     FR-A- 2 794 825

**Beschreibung**

Die Erfindung betrifft ein Steuerungsverfahren zum Ansteuern eines Nachstellsystems einer Scheibenbremse mit einem eine Bremsscheibe übergreifenden Bremssattel, beidseits der Bremsscheibe angeordneten Bremsbelägen, einer Zuspanneinrichtung zum Zuspannen der Scheibenbremse und dem über eine Steuereinrichtung ansteuerbaren, elektromotorisch ausgelegten Nachstellsystem zum Nachstellen der Bremsbeläge bei Auftritt von Bremsbelagverschleiß, wobei das Steuerungsverfahren mit einem Programm der Steuereinrichtung ausgeführt wird.

Scheibenbremsen mit einem elektromotorisch betätigten Nachstellsystem sind an sich bekannt, so z.B. aus der DE 19756519 Al. Bekannt ist ferner eine mittige Anordnung des Nachstellantriebes zwischen den Dreh- oder Stellspindeln, so aus der DE 37 16 202 A1 oder der WO 99/05428.

In der WO 99/05428 wird auch ein besonders einfaches Ansteuerungsverfahren beschrieben, welches ohne zusätzliche Verschleißsensoren ausführbar ist. Dazu wird vorgeschlagen, die Lüftspieleinstellung nach jeder Bremsung oder nach einer vorgegebenen, festen Anzahl von Bremsungen vorzunehmen. Hierzu ist angegeben, dass es bei Vorhanden sein einer entsprechenden Auswertelogik im elektrischen Bremssystem möglich ist, den Belagverschleiß zu überwachen. Dies könnte z.B. mit Hilfe eines speziellen Verschleißsensors erfolgen, was aber kostenaufwendig und möglicherweise auch wenig genau wäre.

Es ist daher die Aufgabe der Erfindung, ein zuverlässiges Steuerungsverfahren für Nachstellsysteme von Scheibenbremsen der genannten Art zu schaffen, welches es ermöglicht, den Verschleiß an den Belägen auch ohne den Einsatz spezieller Verschleißsensoren zu ermitteln und das Nachstellsystem durch eine Verringerung der Anzahl von Nachstellvorgängen zu entlasten.

Die Erfindung löst diese Aufgabe durch den Gegenstand des Anspruches 1.

Danach ist das Steuerungsverfahren als Rechnerprogramm der Steuereinrichtung ausgelegt und weist folgende Schritte auf:

- Ermitteln der bei einer Bremsung auftretenden Bremsenergie,
- Vergleich der ermittelten Bremsenergie mit einem Bremsenergiegrenzwert, und
- Ansteuern des Nachstellsystems zur Durchführung eines Nachstellens im Falle eines Überschreitens des Bremsenergiegrenzwertes.

Der besondere Vorteil der Erfindung ist darin zusehen, dass eine Nachstellung jeweils nur dann erfolgt, wenn die Überprüfung der verbrauchten Bremsenergie ergibt, dass eine Nachstellung notwendig sein sollte. Die Häufigkeit der Nachstellvorgänge wird damit reduziert und das Nachstellsystem entlastet. Die Ermittlung der Bremsenergie erfordert zudem keinen speziellen, extra für diesen Zweck bereit zu stellenden Sensor und ist von daher als Indikator für den Verschleiß bestens geeignet.

Da eine Reduzierung der Häufigkeit der Nachstellvorgänge möglich ist, wird der Elektromotor leistungs- und verschleißseitig entlastet, was die Möglichkeit dazu bietet, den Elektromotor relativ kleinbauend und kostengünstig auszulegen. Darüber hinaus wird die Möglichkeit der Nutzung des Nachstellsystems für zusätzliche Aufgaben geschaffen, was den Nutzwert des elektrischen Nachstellsystems und damit der gesamten Scheibenbremse steigert.

Besonders vorteilhaft ist es hierbei, wenn der Betrag der bei einer Bremsung umgesetzten Bremsenergie in einem Speicher zwischengespeichert und über mehrere Bremsungen hinweg aufsummiert und dann mit dem vorgespeicherten Bremsenergiegrenzwert verglichen wird.

Nach einer Variante der Erfindung wird die Bremsenergie ohne zusätzliche Sensoren direkt aus dem Bremsmoment und dem Raddrehwinkel errechnet.

Bevorzugt wird der Raddrehwinkel mittels eines ABS-Systemes mit einem Potradsensor ermittelt, der bei modernen Bremssystemen stets vorhanden ist und von daher keinen apparativen Mehraufwand bedeutet.

Ebenfalls bevorzugt wird das Bremsmoment auf einfache Weise aus dem Bremszylinderdruck ermittelt, welcher einem EBS- oder ABS-Steuerungsrechner bzw. einer Steuerungseinrichtung ebenfalls zugeleitet wird.

Zweckmäßig - dies kann empirisch ermittelt werden - wird eine Nachstellung jeweils beim Überschreiten eines Energiegrenzwertes von 2 bis 8 MJ, insbesondere SMJ eingeleitet, um einerseits die Häufigkeit der Nachstellvorgänge relativ gering zu halten und um andererseits stets eine genügende Bremssicherheit aufrecht zu erhalten.

Die Erfindung eignet sich für Scheibenbremsen mit elektromotorischer oder pneumatischer Betätigung sowie mit einem Schwimm-, Fest- oder Schiebesattel. Vorzugsweise umfasst das Nachstellsystem auf beiden Seiten der Bremsscheibe jeweils wenigstens eine der elektromotorische Nachstelleinrichtungen.

Nach einer weiteren besonders vorteilhaften und auch unabhängig betrachtbaren Variante der Erfindung wird der Anlegezeitpunkt der Bremse wie folgt ermittelt: nach einer oder mehreren Bremsungen wird das Nachstellsystem im Sinne eines Nachstellens angesteuert, bis der wenigstens eine Nachstellmotor durch die infolge der Zuspannkraft auftretende Reibung gestoppt wird.

Zweckmäßig wird dabei der Anlegezeitpunkt des Nachstellmotors anhand einer Überwachung der Spannungs- und/oder Stromcharakteristik des Nachstellmotors ermittelt.

Vorzugsweise wird der Anlegezeitpunkt auf bei den Seiten der Bremsscheibe separat dadurch ermittelt, dass jeweils der Moment ermittelt wird, bis der wenigstens eine Nachstellmotor auf jeder Seite der Bremsscheibe durch die infolge der Zuspannkraft auftretende Reibung gestoppt wird.

Dies ermöglicht es, bei einer Ermittlung von ungleich starkem Bremsbelagverschleiß auf beiden Seiten der Bremsscheibe auf Grund einer Ermittlung ungleicher Anlegezeitpunkte das Lüftspiel auf beiden Seiten der Bremsscheibe ungleich einzustellen.

Anhand der Ermittlung des Anlegezeitpunktes jeder Bremse mit einem Steuerungsverfahren nach Anspruch 21 und eines Vergleiches des Anlegezeitpunktes verschiedener Bremsen des Fahrzeuges oder eines Fahrzeugverbandes - bestehend aus Zug- und Anhängerfahrzeug - lassen sich nach einem weiteren auch unabhängig betrachtbaren Aspekt der Erfindung die verschiedenen Bremsen des Fahrzeugs derart nachstellen, dass die Anlegezeitpunkte der verschiedenen Bremsen einander angepasst werden. Tritt z.B. einen ungleicher Verschleiß auf Grund einer schwergängig gewordenen Bremsscheibe auf, ist es zweckmäßig, das Lüftspiel auf der Außenseite der Bremsscheibe minimal einzustellen. Durch diese Maßnahme wird der äußere Bremsbelag auch bei schwergängiger Bremsscheibe voll zur Wirkung gebracht und es kann auf diese Weise ein Serviceintervall der Bremse ohne besondere Störungen überbrückt werden.

Die Erfindung schafft auch ein einfaches Verfahren zur Ermittlung der bei Bremsungen umgesetzten Energie, bei dem die Bremsenergie aus dem Bremsmoment und dem bei Bremsungen zurückgelegten Raddrehwinkel errechnet wird.

Die Erfindung schafft ferner ein besonders unkompliziertes Verfahren zur Ermittlung des Bremsbelagverschleißes einer Scheibenbremse eines Fahrzeuges mit einem Verfahren zur Ermittlung der bei Bremsungen verbrauchten Energie, bei dem die Bremsenergie aus dem Bremsmoment und dem bei Bremsungen zurückgelegten Raddrehwinkel errechnet wird und bei dem die seit Inbetriebnahme des Fahrzeuges bzw. seit dem letzten Bremsbelagwechsel auf summierten Beträge der umgesetzten Bremsenergie erfasst und aufsummiert und/oder einem Fahrer mit einer Anzeigevorrichtung angezeigt werden. Mit einem derartigen Verfahren lässt sich eine einfache Vorrichtung zur Bremsbelagverschleißanzeige schaffen, die ohne einen speziellen Verschleißsensor im/am Bremsbelag auskommt.

Weitere vorteilhafte Ausgestaltungen der Erfindung sind den übrigen Unteransprüchen zu entnehmen.

Nachfolgend werden bevorzugte Ausführungsbeispiele anhand der Zeichnung näher beschrieben. Es zeigt:

Figur 1 ein erstes Ausführungsbeispiel einer Ansteuerungsroutine zum Lüftspieleinstellen sowie zum Erkennen des Ansprechzeitpunktes und zum Erfassen des Verschleißzustandes;

Figur 2 eine Routine zur Ermittlung der bei Bremsungen umgesetzten Bremsenergie,

Figur 3 eine Routine zur Verschleißermittlung;

Figur 4 eine Routine zur Steuerung einer Reinigungsfunktion und Sicherung der Schiebbarkeit der Bremsscheibe;

Figur 5a eine Steuerungsroutine zur individuellen Lüftspieleinstellung zur Erkennung des Ansprechzeitpunktes sowie zur Erfassung des Verschleißzustandes;

Figur 5b die Fortsetzung der Routine aus Figur 5a;

Figur 6 eine Steuerungsroutine zum aktiven Zurückstellen der Bremsscheibe;

Figur 7 eine Prinzipskizze einer Scheibenbremse;

Figur 8 eine teilgeschnittene Draufsicht auf eine Scheibenbremse.

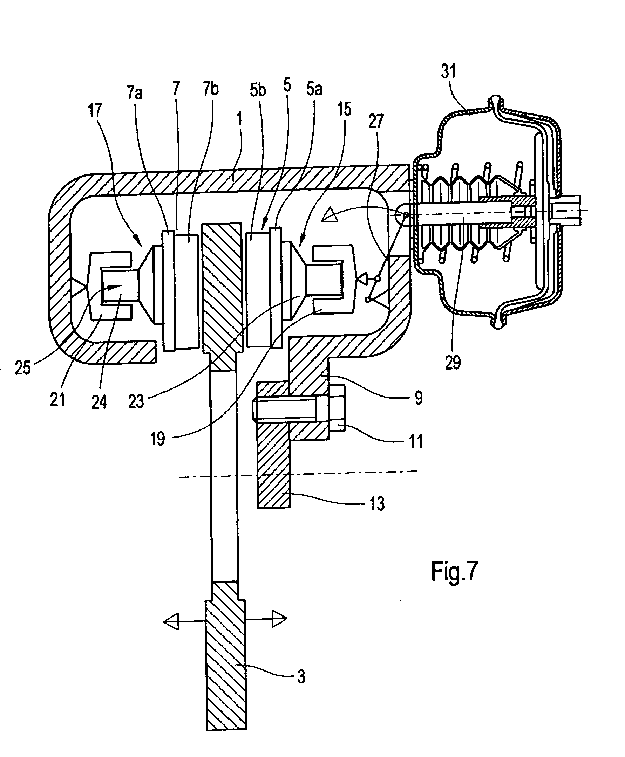

Figur 7 zeigt eine pneumatisch betätigbare Scheibenbremse, die einen Bremssattel aufweist, der eine Bremsscheibe 3 in ihrem oberen Umfangsbereich umfasst. Denkbar, aber nicht dargestellt ist auch eine elektromotorische Betätigung.

Beidseits der Bremsscheibe 3 sind in Richtung der Bremsscheibe und von dieser weg - d.h. senkrecht zur Ebene der Bremsscheibe 3 - verschiebliche Bremsbeläge 5, 7 angeordnet, die in üblicher Weise aus einem Bremsbelagträger 5a, 7a und einem darauf aufgebrachten Belagmaterial 5b, 7b bestehen.

Der Bremssattel ist in Figur 7 im rechten unteren Abschnitt 9, der sich in Richtung der - hier nicht dargestellt - Radachse erstreckt, mittels mindestens eines oder vorzugsweise mehrerer Bolzen 11 beispielhaft an einem Achsflansch 13 der Scheibenbremse befestigt.

Die Bremsscheibe 3 ist hier beispielhaft als Schiebescheibe ausgebildet, welche um den Betrag des bei Bremsungen zu überwindenden Arbeitshubes relativ zum Bremssattel 1 auf der Radachse verschieblich ist. Alternativ oder ergänzend könnte auch der Bremssattel verschieb- oder verschwenkbar ausgebildet sein. Es wäre ferner denkbar, dass der Bremssattel und/oder die Bremsscheibe 3 jeweils um einen Teil des Weges des Arbeitshubes elastisch verformbar ausgebildet sind.

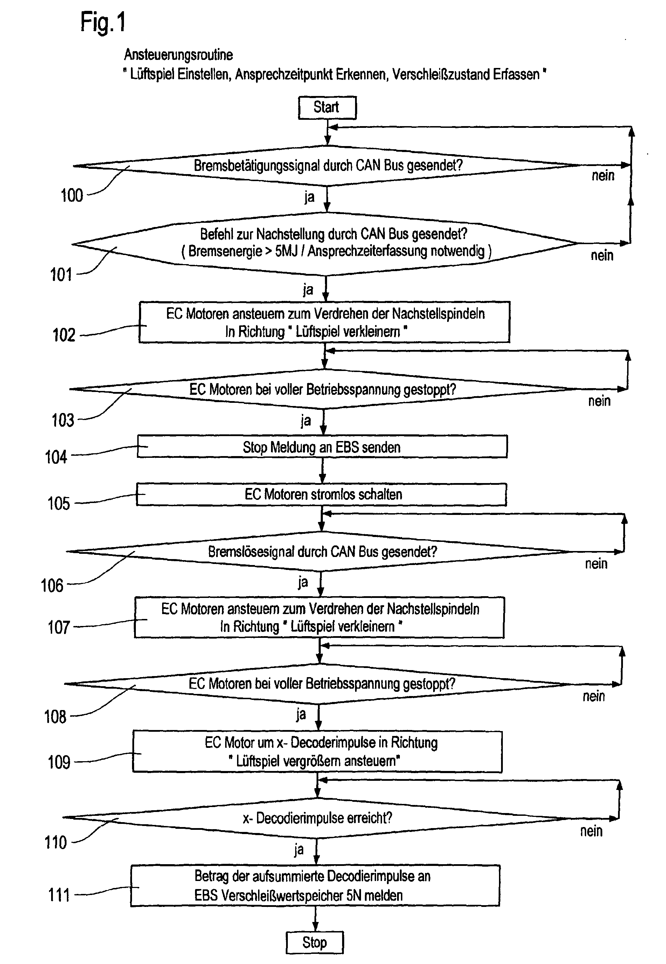

Danach Fig. 1 eine Relativbeweglichkeit zwischen Bremssattel und Bremsscheibe gegeben ist, welche im wesentlichen dem Betrag des Arbeitshubes entspricht, ist ein Nachstellsystem vorgesehen. Dieses umfasst beidseits der Bremsscheibe Nachstelleinrichtungen 15, 17 zum Ausgleich des Lüftspiels bzw. des bei Bremsungen entstehenden Bremsbelagverschleißes.

Die Nachstelleinrichtungen 15, 17 bestehen hier auf jeder Seite der.Bremsscheibe beispielhaft aus jeweils wenigstens einer oder mehr, bevorzugt zwei Nachstellhülsen 19, 21, in welchen bolzenartige Ansätze 24 von Druckstücken 23,25 verdrehbar angeordnet sind, so dass eine relative axiale Beweglichkeit zwischen den Nachstellhülsen 21, 23 sowie den Druckstücken 23,25 gegeben ist. Selbstverständlich ist auch eine umgekehrte Anordnung denkbar, bei der die Druckstücke einen - hier nicht dargestellten - hülsenartigen Ansatz aufweisen, der auf einem Bolzen verdrehbar ist.

Die in Figur 7 rechts dargestellte Nachstelleinrichtung 15 stützt sich an einem neben der Nachstelleinrichtung 15 zur Zuspanneinrichtung gehörigen Drehhebel 27 ab, welcher in seinem in Figur 13 oberen Bereich von einer Kolbenstange 29 eines Bremszylinders 31 betätigbar ist und der in seinem unteren Teil beispielsweise über (hier nicht dargestellte) Kugelelemente oder eine sonstige Lagerung am Bremssattel gelagert ist, wobei er ferner an seiner vom Bremssattel ab gewandten Seite an der Nachstellhülse 19 direkt oder über Zwischenelemente wie Kugeln und/oder weitere Zwischenstücke gelagert ist.

Die auf der dem Drehhebel 27 gegenüberliegenden Seite der Bremsscheibe 1 angeordnete Nachstellhülse 21 ist dagegen direkt am Bremssattelinneren abgestützt.

Bei der Bremse der Fig. 7 sind jeweils beidseits der Bremsscheibe zwei der Nachstellhülsen 19,21 (siehe auch Fig. 15) sowie zwei der Druckstücke 23, 25 angeordnet sind, welche über einen Zahnradmechanismus miteinander synchronisierbar sind.

Dies ist auch besonders gut aus Figur 9 zu erkennen. Die hier dargestellten Nachstellhülsen 19a ist an ihrem äußeren Umfang mit einem Zahnrad 33a oder einem zahnradartigen Ansatz versehen, der mit einem Zahnrad 35a kämmt, welches wiederum von einem Zahnrad 37a angetrieben wird, das seinerseits von einem Abtriebszahnrad 39 eines Elektromotors 41 gedreht wird. Sämtliche Zahnräder 33a, 35a, 37a, 39 liegen in einer Ebene.

Schematisch ist in Fig. 7 noch angedeutet, dass der Elektromotor 41 über eine Daten- und Versorgungsleitung 43 mit einer Steuerungseinrichtung 45 verbunden ist (z.B. eine ABS- und/oder EBS-Steuereinrichtung), welche ihrerseits mit der übrigen Fahrzeugelektronik verbunden sein kann und an die üblicherweise auch die ABS-Sensoren angeschlossen ist.

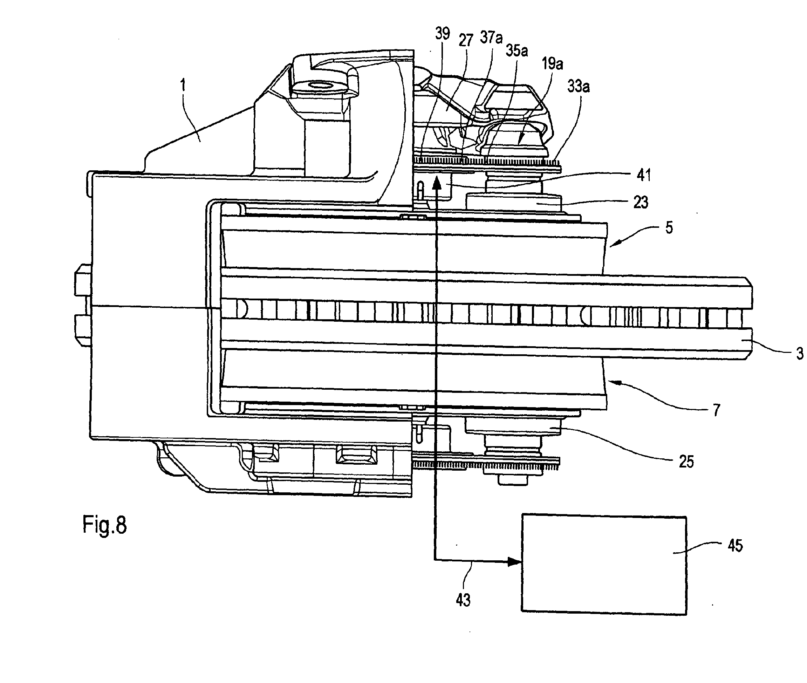

Figur 1 zeigt ein Ansteuerungsverfahren für elektrische Verschleißnachstellsysteme, welches insbesondere - aber nicht nur - für Bremsen nach Art der Figur 7 und 8 geeignet ist.

Das Steuerungsverfahren ist insbesondere nicht auf Bremsen mit beidseitiger elektrischer Verschleißnachstellung beschränkt, sondern nach seiner Grundidee auch für Bremsen mit einseitiger Verscheißnachstellung prinzipiell geeignet.

Allerdings ergeben sich durch die beidseitige elektrisch Verschleißnachstellung besonders vorteilhafte Varianten der Steuerung, welche aus der nachfolgenden detaillierten Beschreibung deutlich werden.

Figur 1 gibt ein besonders umkompliziertes und einfaches Steuerungsverfahren zur Einstellung des Lüftspieles wieder.

Nach einer vorgegebenen Anzahl von Bremsbetätigungen -in Sonderfällen sogar bei jeder Bremsbetätigung -erhält das Nachstellsystem bzw. jeder Elektromotor beidseits der Scheibenbremse einen Ansteuerimpuls aus einer vorgeschalteten Steuerelektronik bzw. der Steuerungseinrichtung 43. Diese kann beispielsweise durch ein EBS-System oder durch eine direkt in die Bremse integrierte Steuerelektronik gebildet werden, aber auch durch jede andere der Scheibenbremse zugeordnete oder vorgeschaltete Steuerelektronik, sofern diese mit geeigneten Anschlüssen an die Scheibenbremse sowie mit einer Recheneinrichtung bzw. einem Mikroprozessor zur Verarbeitung der sensierten Signale und zur Ausgabe entsprechender Steuersignale an die Scheibenbremse ausgelegt ist.

Diese Ansteuerung des Bremssystems erfolgt lediglich, wenn die Bremse im Sinne eines Zuspannens angesteuert wird. Sensiert kann dies z.B. anhand des Signals eines Bremsdruckschalters oder anhand eines sonstigen äquivalenten Signals aus dem EBS-System.

Aufgrund der relativ geringen Stellgeschwindigkeit des Elektromotors erfolgt zunächst nur ein geringes Zustellen, da der Nachstellmotor durch infolge der Zuspannkraft auftretende Reibung im Spindelsystem gestoppt wird.

Dabei wird diese Stoppfunktion in vorteilhafter Weise dazu genutzt, den Anlegezeitpunkt jeder Bremse individuell zu ermitteln. Diese Information ermöglicht eine Abgleichung des Anlegepunktes aller Bremsen einer Fahrzeugkombination, was eine Bremsenabstimmung insbesondere zwischen einem gezogenen und einem ziehenden Fahrzeug bei Fahrzeugkombinationen realisierbar macht.

Zu diesem Zweck erfolgt der Nachstellvorgang vorzugsweise bei jeder Bremsbetätigung solange, bis die Bremssteuerung abgeglichen ist. Nach Beendigung des Bremsvorganges - was z.B. durch das Erlöschen des Bremsdrucksignals angezeigt wird - wird die Nachstellvorrichtung nochmals im Sinne einer Lüftspielreduzierung angesteuert, bis der Motor beim Anlegen/Anliegen der Bremsbacken an die Bremsscheibe durch die in den Nachstellspindeln entstehende Reibkraft gestoppt wird.

Von dieser Position aus erfolgt nun ein Ansteuern in Löseeinrichtung, wobei eine vorgegebene Anzahl von Motorumdrehungen ausgeführt wird, welche das Soll-Lüftspiel erzeugt.

Ein derartiges Steuerungsverfahren ist in seinen Grundzügen in Figur 1 dargestellt. Nach Figur 1 wird im Mikroprozessor der Steuerungseinrichtung 45 folgende Steuerungsroutine zum Einstellen des Lüftspieles sowie zum Erkennen des Ansprechzeitpunktes und zum Erfassen des Verschleißzustandes durchgeführt.

Zunächst wird innerhalb der Steuerungsroutine durch einen Programmschritt 100 ermittelt, ob ein Betätigungssignal durch einen Datenübertragungsbus - z.B. CAN Bus - gesendet wurde.

Ist dies nicht der Fall, wird die Überprüfung des Anliegens des Bremsbetätigungssignals neu gestartet.

Alternativ kann die Routine selbstverständlich auch so lange ruhen, bis durch das Bremsbetätigungssignal eine Eingabe erfolgt bzw. anliegt.

Sofern ein Bremsbetätigungssignal durch den Datenbus gesendet wurde, wird ermittelt, ob ein Befehl zur Nachstellung durch den CAN-Bus übertragen wurde.

Bevorzugt wird dies anband einer Überprüfung, der bei vorangegangenen Bremsungen verbrauchten Bremsenergie ermittelt, wozu eine Ansprecherfassung notwendig ist, was nachfolgend anhand der weiteren Figuren näher erläutert werden wird.

Sofern kein Befehl zur Nachstellung durch den CAN-Bus gesendet wurde (Schritt 101), erfolgt keine Nachstellung und die Programmroutine kehrt zum Start zurück, da bei dieser Bremsung noch keine Nachstellung notwendig ist.

Hier zeigt sich bereits ein besonderer Vorteil der erfindungsgemäßen Nachstellroutine, da eine Nachstellung jeweils nur dann erfolgt, wenn die Überprüfung der verbrauchten Bremsenergie ergibt, dass eine Nachstellung notwendig sein sollte. Sofern im Schritt 101 ermittelt wurde, dass ein Befehl zur Nachstellung durch den CAN-Bus vorliegt, werden die Elektromotoren (EC-Motoren) zum Verdrehen der Nachstellspindeln angesteuert, um das Lüftspiel zu verkleinern (Schritt 102).

Dabei wird überprüft, wann die Elektromotoren bei voller Betriebsspannung gestoppt werden. Sofern dies der Fall ist, legt der Bremsbelag an der Bremsscheibe an, so dass keine weitere Nachstellbewegung möglich ist. Auf diese Weise ist es unkomplizierte Art möglich, den Ansprechzeitpunkt der Bremse präzise zu ermitteln.

Falls beim Schritt 103 ermittelt wird, dass die EC-Motoren in voller Betriebsspannung gestoppt wurden, wird eine Stoppnachricht an das EBS-Steuergerät übersandt (Schritt 104) und die Elektromotoren werden in einem nachgeschalteten Schritt 105 stromlos geschaltet.

Sofern nunmehr ein Bremslösesignal durch den CAN-Bus gesendet wurde (Schritt 106), werden die Elektromotoren in einem weiteren Schritt 107 zur Verdrehung der Nachstellspindeln (Drehspindeln 19, 21) in Richtung einer Verkleinerung des Lüftspieles angesteuert.

Nach dem Überwinden des Lüftspieles liegen die Elektromotoren an der Bremsscheibe an. Dies bedeutet, dass der Elektromotor bei voller Betriebsspannung gestoppt wird. Wird dies in einem weiteren Schritt 108 ermittelt, wird der Elektromotor in einem weiteren Schritt 109 in entgegengesetzter Richtung angesteuert (Ansteuerung um x- Decodierimpulse in Richtung "Lüftspiel vergrößern"), um das Lüftspiel im Schritt 109 einzustellen.

Wird ermittelt, dass die vorgegebene Anzahl von x Decodierimpulsen in Richtung des Lüftspielvergrößerns erreicht wurde, wurde das Lüftspiel korrekt eingestellt und der Betrag der auf summierten Dekodierimpulse wird an einen EBS-Verschleißwertspeicher übertragen (Schritt 111).

Nach dem korrekten Einstellen des Lüftspiels kehrt die Routine der Figur 1 in ihre Startposition zurück.

Ein besonderer Vorteil des Systems ist darin zu sehen, dass eine Nachstellung der Bremse nicht nach jedem Bremsanlegen erfolgt, sondern lediglich nach einer vorgegebenen Anzahl von Bremsungen. Hierzu ist es notwendig, das Steuerungsverfahren dazu auszulegen, dass auf einfache Weise die Häufigkeit der Lüftspieleinstellung ermittelt werden kann.

Bei sehr einfachen Steuerung kann die Lüftspieleinstellung zwar nach jeder Bremsbetätigung erfolgen. Dies führt jedoch zu einer hohen Beanspruchung des Nachstellmechanismus. Eine Lüftspieleinstellung sollte vielmehr nur erfolgen, wenn eine Veränderung des Lüftspiels durch Verschleiß, Wärmeausdehnung oder Schrumpfung der Reibkörper bei oder nach Heißbremsungen über einen bestimmten Betrag hinaus erfolgt oder andere Systemfunktionen wie z.B. der Abgleich des Ansprechzeitpunkts der Bremsen eines Fahrzeuges oder einer Fahrzeugkombination dies erfordert.

Der Toleranzbetrag der eingetretenen Lüftspielabweichungen vom Sollwert kann z.B. einige Prozent (z.B. 10 Prozent) des Soll-Lüftspiels betragen. In Zatilen ausgedrückt bedeutet dies beispielhaft bei einem Soll-Lüftspiel von 0,4 mm, dass der Toleranzbetrag 0,04 mm vom Gesamtlüftspiel beträgt, was bei Bremsen mit beidseitiger elektrischer Nachstellvorrichtung einem Lüftspiel von 0,02 mm pro Seite entspricht.

Zur Ermittlung des Toleranzlüftspieles kann jedoch nicht einfach der eingetretene Bremsenverschleiß über die zurückgelegte Wegstrecke des Fahrzeuges oder über die Fahrzeit seit dem letzten Nachstellvorgang bestimmt werden. So ist es selbstverständlich ein großer Unterschied, ob ein Nutzfahrzeuge beispielsweise im Flachland oder im Gebirge bewegt wird. Eine geeignetere Größe stellt nach einer Idee der Erfindung aber die bei Bremsungen verbrauchte Bremsenergie dar. Diese wird nach einer Idee der Erfindung näherungsweise aus dem Drehzahlsignal und dem Bremsdrucksignal ermittelt:

$$W_B = M_B \, \varphi_B,$$

wobei

$W_B :$     = Bremsenergie;
$M_B :$     = Bremsmoment
$\varphi_B :$     = Raddrehwinkel.

Der Raddrehwinkel wird unmittelbar über den z.B. für die ABS-Funktion des Bremsregelsystems benötigten Drehzahlsensor bestimmt. Der Drehzahlsensor besteht aus einem Polrad, welches mit der Radnabe umläuft und einem feststehenden Geber, der die vorbei bewegten Zähne, Magnetspulen usw. des Polrades mit einem Spannungsimpuls registriert. Bei z.B. 100 Zähnen pro Polrad entspricht somit ein Impuls einem Raddrehwinkel von 3,6°. Durch Aufsummieren dieser Impulse wird der Raddrehwinkel während der Bremsphase ermittelt.
Das Bremsmoment wird mittels des im EBS-System vorhandenen Drucksensors durch Ermittlung des Bremszylinderdrucks wie folgt ermittelt:

$$M_B = (P_Z - P_{An}) \, A_Z \, i\varepsilon C^\star r_{eff,}$$

Hierbei bedeutet:

$P_Z$     = Druck im Bremszylinder und
$P_{An}$     = Anlegedruck der Bremse
$i$     = Kraftübersetzungsverhältnis der Bremse
$\varepsilon$     = mechanischer Wirkungsgrad des Kraftübersetzungsmechanismus der Bremse
$C^*$     = Bremsenkennwert = $2 \, \mu_B$
$\mu_B$     = Reibungswert des Bremsbelages
$r_{eff}$     = wirksamer Reibradius der Bremsscheibe
$Z$     = Anzahl der aufsummierten Drehwinkelimpulse
$A_Z$     = Wirksame Kolbenfläche des Bremszylinder.

Mit Ausnahme des Bremszylinderdruckes können all o.g. Größen als konstante Größen angenommen werden. Der Reibungsbeiwert und damit der C*-Wert der Bremse unterliegen zwar betriebsbedingten Schwankungen, jedoch kann für den vorliegenden Zweck zuverlässig mit einem Mittelwert als konstante Größe gerechnet werden.
Daraus ergibt sich:

$M_B$     $= (P_Z - P_{An}) \, A_Z \, i \, \varepsilon \, C^* \, r_{eff,}$
$M_B$     $= (P_Z - P_{An}) \, K$

Für ein Polrad mit n - Zähnen beträgt der Raddrehwinkel pro Zahn.

$$\varphi \quad = \quad 2\pi / n.$$

Damit ergibt sich für die pro Zahn, d.h. pro Drehzahlimpuls umgesetzte Bremsenergie:

W    = ($P_Z$-$P_{An}$; wobei K = $A_Z$ ε C* $r_{eff}$ 2π/n.

Die umgesetzte Bremsenergie wird somit durch einfache Verknüpfungen des Bremszylinderdruck-Signals mit der Anzahl der Raddrehimpulse ermittelt.

Für den Beginn eines nachfolgenden Nachstellvorganges kann nun ein Grenzwert festgelegt werden, der durch Aufsummieren der Werte ($P_Z$ - $P_{An}$) x K aus aufeinanderfolgenden Bremsungen ermittelt wird. Erreicht dieser Summenwert den vorgegebenen Grenzwert, wird ein Nachstellvorgang durch die Ansteuerelektronik des Nachstellsystems eingeleitet.

Der Zusammenhang Verschleiß-Bremsenergie wird für die verwendete Reibpaarung experimentell ermittelt.

Für einen typischen Bremsbelag der Scheibenbremstype für Nutzfahrzeuge mit 22,5-Zoll-Rädern ergibt sich aus der Auswertung unterschiedlicher Verschleißuntersuchungen, dass ein Gesamtverschleiß beider Bremsbeläge von ca. 0,02 mm bei ca. 5 MJ (Mega Joule) umgesetzter Bremsenergie erreicht wird.

Die Grenzenergie von 5 MJ wird bei extremen Bremszuständen, z.B. auch Hochgebirgsfahrten bereits mit einer einzigen Bremsbetätigung erreicht. Bei normalen Anpassungsbremsen sind jedoch 5 bis 50 Bremsbetätigungen bis zum Erreichen des Grenzwertes nötig.

Durch die Festlegung des Grenzwertes auf 5 MJ umgesetzte Bremsenergie (bezogen auf Scheibenbremsen für Nutzfahrzeuge mit 22,S-lall-Rädern) wird der Effekt des Wachsens von Bremsscheibe und Bremsbelag bei Extrembremsungen ausreichend abgesichert, da die vorgegebene Bremsenergie unter diesen Bedingungen bereits bei einer einzigen Bremsbetätigung erreicht wird.

Bei Extrembremsungen mit ca. 5 MJ Bremsenergie pro Betätigung kann die Bremsscheibentemperatur um 400 °C gesteigert werden, wodurch sich eine Vergrößerung von ca. 0,2 mm der Bremsscheibe eintritt, während gleichzeitig die Bremsbeläge um 0,02 mm verschlissen werden. Wird insofern das Lüftspiel vor Bremsbeginn auf ca. 0,3 bis 0,4 mm eingestellt, kann auch bei derartigen Extrembremsungen kein Zuwachse der Bremse mit der Folge eines möglichen Heißlaufens eintreten.

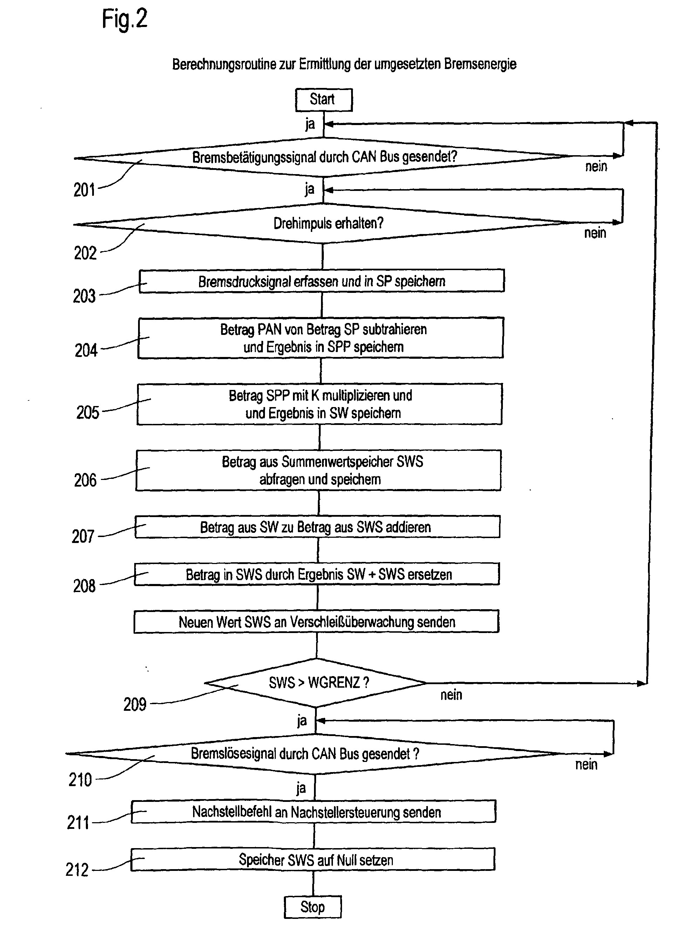

Figur 2 zeigt eine entsprechende Darstellung der Routine zur Ermittlung der umgesetzten Bremsenergie als Flussdiagramm.

Nach einem Start der Routine wird ermittelt, ob ein Bremssignal durch CAN-Bus gesendet wurde (Schritt 201), woraufhin überprüft wird, ob ein Drehzahlimpuls erhalten wurde (Schritt 202). Ist dies nicht der Fall, wird weiter überprüft, ob ein Drehzahlimpuls vorliegt. Liegt ein Drehzahlimpuls vor, wird zunächst das Bremsdrucksignal erfasst und in einem Speicher SP gespeichert (Schritt 203), woraufhin der Betrag des Anlegedruckes $P_{An}$ vom Betrag SP subtrahiert wird und das Ergebnis in einem Feld SPP gespeichert wird (Schritt 204), woraufhin der Betrag SPP mit K multipliziert und in einem Speicher SW gespeichert wird (Schritt 205).

Daraufhin wird der Betrag aus dem Summenwertspeicher SWS abgefragt und gespeichert (206) und der Betrag aus dem Speicher SW zum Betrag aus dem Summenwertspeicher SWS hinzu addiert (Schritt 207) und daraufhin der Betrag im Summenwertspeicher SWS durch das Ergebnis der Summierung aus dem Wert SW und SWS ersetzt (Schritt 208).

Überschreitet dieser Wert in den Summenwertspeicher einen vorgegebenen Grenzwert WGRENZ (Schritt 209), wird, sobald ermittelt wird, dass ein Bremslösesignal anliegt (Schritt 210) ein Nachstellbefehl 211 an die Nachstellsteuerung gesendet (siehe Figur 1) und der Summenwertspeicher in einem Schritt 212 auf null gesetzt.

Ist dagegen im Schritt 209 der Wert im Summenwertspeicher kleiner als der vorgegebener Grenzwert WGRENZ kehrt das Programm zum Start zurück.

Auf diese Weise ist es unkompliziert möglich, den vorstehend angegebenen Formelzusammenhang zum Nachstellen des Bremssystems durch eine Ermittlung der Bremsenergie, welche bei Bremsungen verbraucht wurde, zu nutzen. Die auf summierte Bremsenergie entspricht dem Wert SWS im Summenwertspeicher. Das Ergebnis der Aufsummierung kann beispielsweise auch dazu verwendet werden, um das Verschleißverhalten der Bremsbeläge zu beurteilen und um auffällige Abweichungen zur Anzeige zu bringen.

Hierzu werden die seit Inbetriebnahme des Fahrzeuges bzw. seit dem letzten Bremsbelagwechsel auf summierten Beträge der umgesetzten Bremsenergie erfasst und gespeichert. Diese Werte werden mit in der Auswertelektronik gespeicherten Vorgabewerten verglichen. Auf diese Weise können Zustände, die zu einem überhöhten Bremsverschleiß führen, rechtzeitig erkannt und abgestellt werden. Solche Zustände können sich z.B. ergeben durch Mängel an Radbremsen oder in der Bremsenansteuerung, durch eine mangelnde Wirkung der Bremsen des anderen Fahrzeuges in einer Fahrzeugkombination oder aber durch eine besonders bremsenintensive Fahrweise etc.

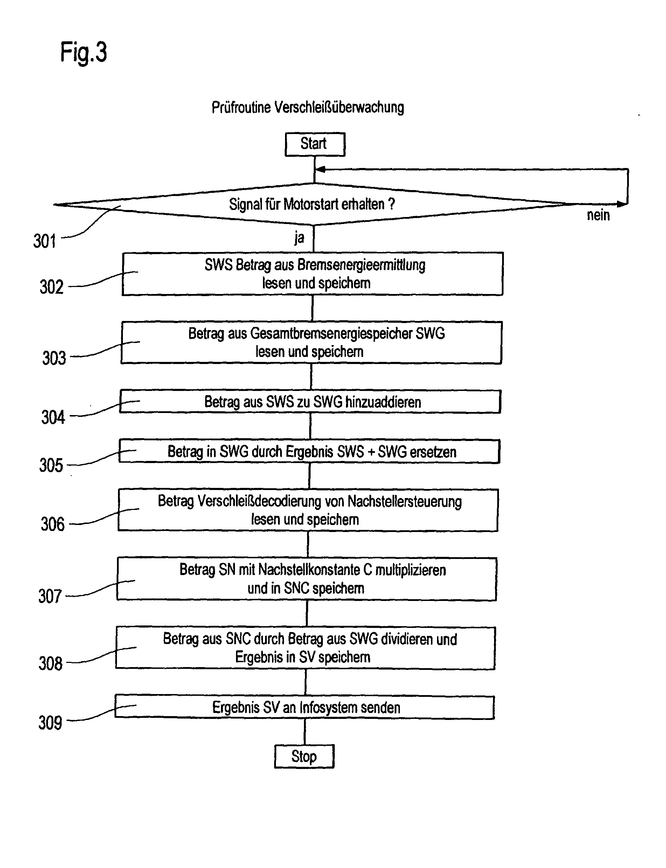

Eine derartige Überwachungsroutine zeigt Figur 3. In einem ersten Schritt 301 dieser Programmroutine zur Verschleißüberwachung bzw. zur Ermittlung von Auffälligkeiten des Systems wird nach Ermittlung eines Motorstars bzw. Erhalt eines Signals zum Motorstart (Schritt 301) der Betrag aus dem Summenwertspeicher SWS ausgelesen und zwischengespeichert.

Es wird ferner der Gesamtbremsenergiespeicher ausgelesen und zwischengespeichert (Schritt 303). Dieser Gesamtbremsenergiewert wird hier mit SWG bezeichnet. Sodann wird in einem Schritt 304 der Betrag aus SWS und SWG zusammenaddiert und der Betrag im Gesamtbremsenergiespeicher SWG durch die Summe aus SWS und SWG ersetzt (Schritt 305), woraufhin der Betrag der Verschleißdecodiersteuerung der Nachstellersteuerung ausgelesen und gespeichert wird (Schritt 306), woraufhin der Betrag SN mit einer Nachstellkonstante C multipliziert und in einem Speicherfeld SNC gespeichert wird, woraufhin der Betrag aus dem Speicherfeld SNC durch den Betrag der Gesamtbremsenergie SWG dividiert und das Ergebnis im Speicher SV gespeichert wird (Schritt 308) und das Ergebnis der Verschleißüberwachung in einem Schritt 309 an ein Infosystem gesandt wird, wo im Falle von Auffälligkeiten beispielsweise über einen Bildschirm des Fahrzeuges eine entsprechende Ausgabe erfolgt.

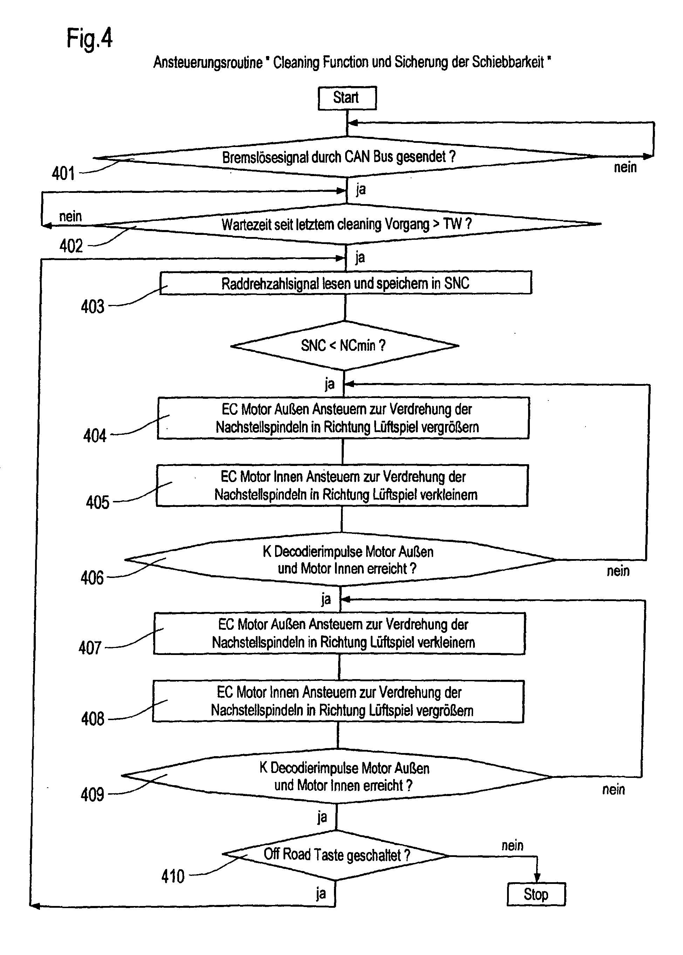

Figur 4 ff zeigen weitere vorteilhafte Funktionen, welche mit der erfindungsgemäßen Lüftspieleinstellung realisierbar sind.

So ergeben sich Möglichkeiten zur

1. Ermittlung des Anlagezeitpunkts der Bremse;
2. zur Verschleißüberwachung;
3. zur Reinigung (cleaning function, Nässe, Streusalz, Schmutz),
4. zur individuellen Lüftspieleinstellung an beiden Seiten der Bremsscheibe;
5. zum aktiven Zurückstellen der Bremsscheibe nach einer Bremsbetätigung;
6. zur Sicherung der Schiebbarkeit der Bremsscheibe durch ein Hin- und Zurückverschieben der Bremsscheibe über deren gesamten Verschiebebereich bei ungebremster Fahrt um den Verschiebeweg von Schmutz, Korrosion etc. freizuhalten und Verschiebbarkeit der Bremse zu überprüfen,
7. zur Sensierung des Bremsbelagverschleißes.

Eine Reinigungs- bzw. Cleaning-Funktion kann dadurch realisiert werden, dass die Bremsbeläge mittels des elektrischen Verschleißnachstellsystems bei ungebremster Fahrt periodisch oder unter bestimmten Voraussetzungen fortwährend mit der Bremsscheibe in leicht schleifenden Kontakt gebracht werden.

Vorteilhaft wird der Anlage der Anlege- und Reinigungsvorgang nicht an bei den Reibflächen der Bremsscheibe gleichzeitig vorgenommen, da die entstehende Erwärmung eine thermische Ausdehnung von Bremsscheibe und Bremsbelägen zur Folge hat und damit ein Verspannen der Bremse ggf. mit der Folge eines Heißlaufens derselben auftreten kann.

Dies gilt insbesondere, wenn während des Reinigungsvorgangs eine Bremsung eingeleitet wird. Der Reinigungsvorgang wird im wesentlichen derart ausgeführt, dass die Nachstellvorrichtung an einer Seite der Bremsscheibe im Sinne einer Lüftspielverkleinerung in Richtung zur Bremsscheibe bewegt wird, welche sie leicht schleifend reinigt, während gleichzeitig die gegenüberliegende Nachstellvorrichtung so gesteuert wird, dass sie sich von der Bremsscheibe fortbewegt. Danach kann dieser Vorgang umgekehrt und/oder bedarfsabhängig oder automatisch wiederholt werden.

Figur 4 zeigt eine Routine zur Sicherung der Schiebbarkeit der Bremse und zur Realisierung einer Cleaning-Funktion.

Nach dem Start der Routine wird zunächst überprüft, ob ein Bremslösesignal durch den CAN-Bus gesendet wurde (Schritt 401).

Ist dies der Fall, wird die Wartezeit seit dem letzten Cleaning-Vorgang in einem nächsten Schritt 402 mit einem Grenzwert TW verglichen.

Wurde die Wartezeit überschritten, wird in einem Schritt 403 die Raddrehzahl ermittelt und in einem Speicherfeld SNC abgespeichert.

Sofern der Wert im Speicherfeld SNC kleiner ist als ein Grenzwert in NCmin ist, erfolgt eine Ansteuerung des Elektromotors außen zur Verdrehung der Nachstellspindeln in Richtung einer Vergrößerung des Lüftspiels (Schritt 404) sowie darauf hin eine Ansteuerung des innenliegenden Elektromotors zur Verdrehung der Nachstellspindeln in Richtung einer Verkleinerung des Lüftspiels (Schritt 405).

Sofern nunmehr die Decodierimpulse am Motor außen und am Motor innen einen vor- gegebenen Wert K erreichen (Schritt 406), erfolgt ein weiteres Ansteuerung des Elektromotors außen zur Verdrehung der Nachstellspindeln in Richtung einer Verkleinerung des Lüftspieles (407) sowie ein weiteres Ansteuern des Elektromotors 7 zur Verdrehung der Nachstellspindeln in Richtung einer Vergrößerung des Lüftspiels (Schritt 408).

Sofern auch hier die vorgegebene Zahl von K Decodierimpulse erreicht wurde (Schritt 409), wird noch überprüft, ob weiterhin eine Off-Road- Taste geschaltet ist, d.h. ob weiterhin die Cleaning-Funktion vom Fahrer aktiviert wurde (Schritt 410). Ist dies nicht der Fall, wird die Routine gestoppt, andernfalls kehrt das Programm zum Schritt 402 oder 403, d.h. beispielsweise zur Überprüfung der Wartezeit zurück.

Entsprechend kann mit dem Bremsen eine vorteilhafte Einstellung des Bremssystems bei Nässe- und Streusalzeinwirkung vorgenommen werden. So wird in diesem Fall ein periodisches Anlegen der Bremsbeläge in bestimmten Zeitintervallen vorgenommen, um die Bremsscheibe von Nässe- und Streusalzeinwirkungen freizuhalten. Durch diese Maßnahme soll ein Nachlassen der Wirkung der Bremsen infolge Reibwertminderung vermieden werden.

Bei Schmutzeinwirkungen insbesondere im Off-Road- und Baustellenbetrieb wird die Cleaning-Funktion durch den Fahrer durch Betätigung eines Schalters oder automatisch bei Fahrtgeschwindigkeiten unter einem bestimmten Grenzwert, z.B. 10 km/h, ausgelöst oder aber durch eine Kombination von beiden Maßnahmen (ausgelöst durch den Fahrer), aber nur unterhalb von z.B. 10 km/h aktiviert). Die Bremse soll dabei bei niedrigen Fahrgeschwindigkeiten und hoher Schmutzbelastung -z.B. beim Fahren im Sand -ständig leicht schleifend betrieben werden. Diese Funktion dient dazu, die Reibflächen von Bremsbelägen und Bremsscheibe von stark verschleißerhöhendem abrasivem Schmutz freizuhalten.

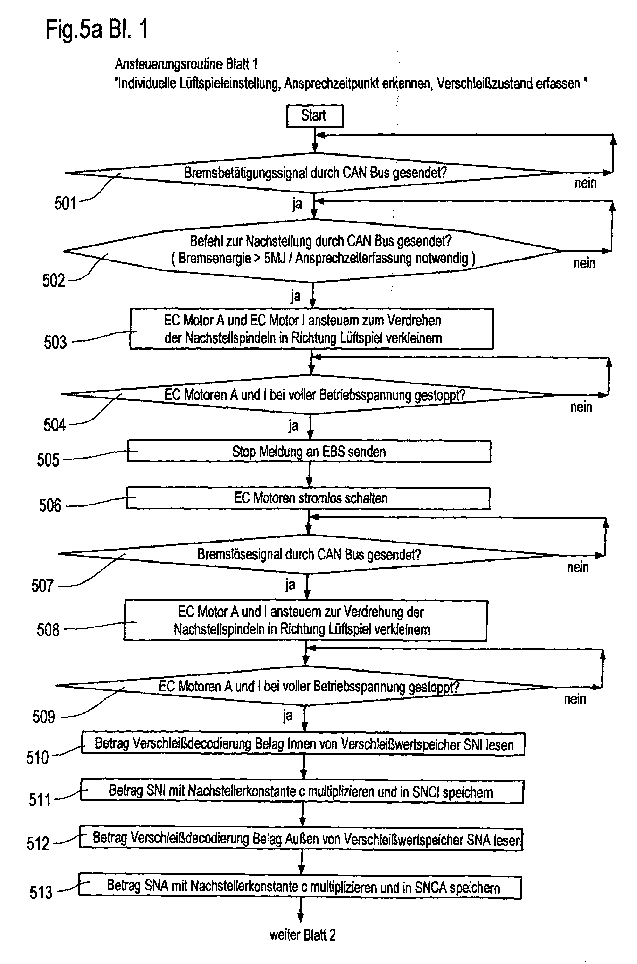

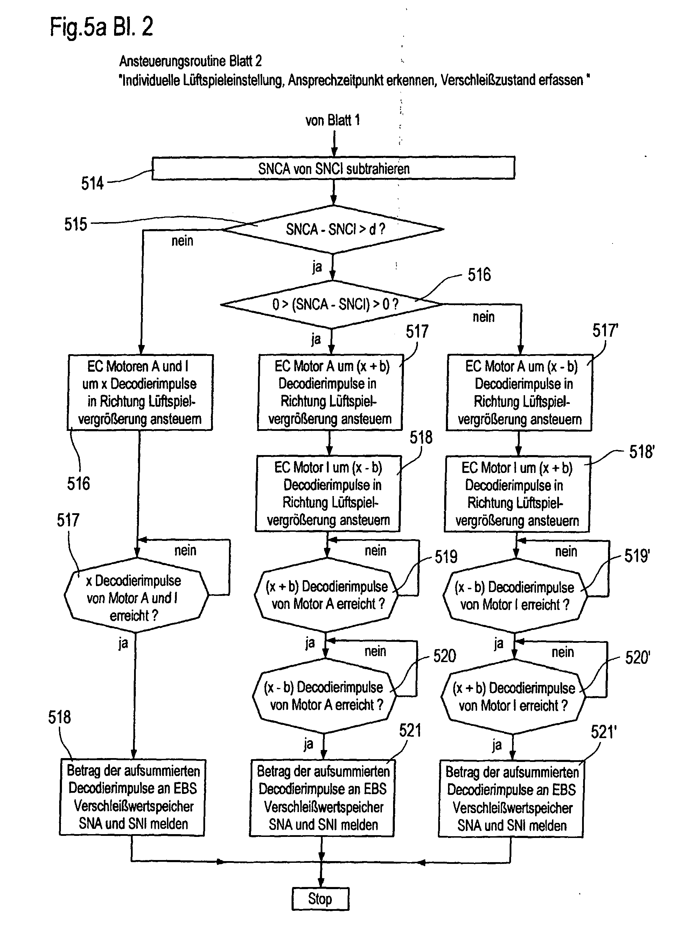

Mit der Erfindung ist es auch möglich, eine individuelle Lüftspieleinstellung vorzunehmen. Hierzu wird beim Auftreten von ungleich starkem Bremsbelagverschleiß das Lüftspiel auf beiden Seiten der Bremsscheibe ungleich eingestellt. Ein derartiges Steuerungsverfahren ist in Figur 5 dargestellt.

Nach dem Start der Routine wird in einem Schritt 501 zunächst ermittelt, ob ein Bremsbestätigungssignal durch den CAN-Bus gesendet wurde. Ist dies der Fall, wird festgestellt, ob ein Befehl zur Nachstellung im CAN-Bus anliegt (z.B.: wenn ein Bremsenergiegrenzwert überschritten wurde -Schritt 502).

Ist dies der Fall, werden die Elektromotoren außen und innen angesteuert, um das Lüftspiel zu verkleinerri (Schritt 503).

Sobald die Elektromotoren außen und innen stoppen, liegen die Bremsbeläge an (Schritt 504).

In diesem Fall wird eine Stoppmeldung an das EBS-System gesandt (Schritt 505) und die Elektromotoren werden stromlos geschaltet (506).

Sobald ein Bremslösesignal durch den CAN-Bus gesendet wurde (Schritt 507), werden die Elektromotoren außen und innen zur Verdrehung der Nachstellspindeln in Richtung der Verkleinerung des Lüftspiels angesteuert (Schritt 508).

Beim Stoppen der beiden Elektromotoren (Schritt 509) wird sodann die Betrag der Verschleißdecodierung des inneren Belages aus dem Verschleißwertespeicher SNI ausgelesen (510) und dann der Betrag des Verschleißwertspeichers SNI mit einer Nachstellerkonstante C multipliziert und in einem Speicherfeld SNCI gespeichert (Schritt 511). Sodann wird der Betrag der Verschleißdecodierung des Belages außen aus dem Verschleißwertspeicher SNA ausgelesen (Schritt 512) und der Betrag des Verschleißwertspeichers SNA mit einer Nachstellerkonstante C multipliziert (Schritt 513) und in einem Speicherfeld SNCA gespeichert.

Daraufhin werden in einem weiteren Schritt 514 (siehe Figur 5b) die Werte SNCI und SNCA durch Subtrahieren des Wertes SNCA von SNCI miteinander verglichen.

Je nachdem, ob der Betrag von SNCA minus SNCI größer als ein vorgegebener Wert D ist oder nicht, wird entweder in einem Schritt 516 ein Ansteuern bei der Elektromotoren außen und innen um x Decodierimpulse veranlasst, um das Lüftspiel zu vergrößern. Sobald die x Decodierimpulse erreicht werden (Schritt 517), wird der Betrag der aufsummierten Decodierimpulse an den EBS-Verschleißwertspeicher gemeldet (Felder SNA und SNI) (Schritt 518).

Ist dagegen SNCA minus SNCI größer als der vorgegebene Wert d, liegt ein ungleicher Zustand am inneren und äußeren Bremsbelag vor, der stärker als vorgegeben von einer Grenzbedingung abweicht.

Je nachdem, ob SNCA minus SNCI größer oder kleiner als null ist (Schritt 516), erfolgt ein unterschiedliches Ansteuern der Elektromotoren außen und innen. So wird im Schritt 517 entweder der äußere Elektromotor um x plus b Decodierimpulse in Richtung Lüftspielvergrößerung oder aber um x minus b Decodierimpulse in Richtung Lüftspielvergrößerung angesteuert (Schritt 517,517') und der Elektromotor innen wird entsprechend entweder um x minus b oder um x plus b Decodierimpulse in Richtung einer Vergrößerung des Lüftspiels angesteuert (Schritt 518,518'). Nach dem Errechen der vorgegebenen Anzahl von Dekodierimpulsen (Schritte 519,519',520,520') wird der Betrag der auf summierten Decodierimpulse an die EBS Verschleißwertspeicher SNA und SNI gemeldet (Schritte 521, 521') und die Routine gestoppt.

Zum aktiven Zurückstellen der Bremsscheibe nach einer Bremsbetätigung wird die Bremsscheibe in ihre Ausgangsposition zurückbewegt, sofern diese verschieblich ausgelegt ist, um bei der nächsten Bremsbetätigung wieder den vollen Arbeitshub auszuführen. Hierzu kann vorteilhaft, z.B. ein Anschlag am Aufnahmeprofil der Radnabe zur Fahrzeuginnenseite vorgesehen sein bzw. zu der Seite der Bremse hin, an welcher der zu betätigende Bremshebel angeordnet ist. Nach dem Lösen der Bremse wird die Bremsscheibe durch die außen liegende Nachstellvorrichtung um einen vorgegebenen Betrag in Richtung gegen diesen Anschlag verschoben, wobei die innenliegende Nachstellvorrichtung entsprechend zurückweicht.

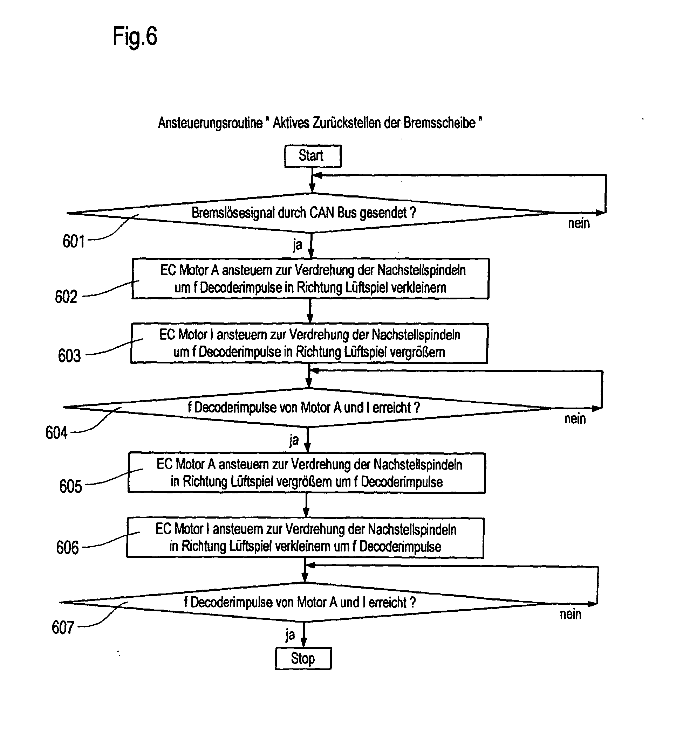

Eine entsprechende Funktion zeigt Figur 6.

Nach dem Start der Routine zum aktiven Zurückstellen der Bremsscheibe wird in einem Schritt 601 überprüft, ob ein Bremslösesignal im CAN Bus anliegt. Sodann wird der äußere Motor in einem Schritt 602 angesteuert, um die Nachstellspindeln um f Decodierimpulse in Richtung des Lüftspielverkleinerns anzusteuern. Sodann bzw. währenddessen wird der innere Elektromotor angesteuert und die Nachstellspindeln um f Decodierimpulse in Richtung einer Lüftspielvergrößerung anzusteuern. Sobald der Grenzwert f anliegt (Schritt 604), wird der äußere Elektromotor A zur Verdrehung der Nachstellspindeln in Richtung Lüftspielvergrößern um f Decodierimpulse angesteuert (Schritt 605) und der innere Elektromotor zur Verdrehung der Nachstellspindeln in Richtung einer Lüftspielverkleinerung ebenfalls um f Decodierimpulse angesteuert (Schritt 606). Sobald der Grenzwert f erreicht wird (Schritt 607), wird die Routine gestoppt.

Mit der Erfindung ist es auch möglich, die Schiebbarkeit der Bremsscheibe zu überwachen. Die Überwachung der Freigängigkeit der Bremsscheibe in ihrem Nabenaufnahmeprofil sowie zur Sicherstellung der Freigängigkeit wird die Bremsscheibe in periodischen Abständen bei rotierendem Fahrzeugrad über ihren gesamten Schiebeweg hin und her verschoben. Dieses Verschieben kann einmal oder mehrmals in Folge geschehen. Hierzu werden die innen und außen liegenden Nachstelleinrichtung entsprechend gegenläufig angesteuert. Durch das häufige Verschieben bei rotierendem Fahrzeugrad wird das Aufnahmeprofil von Schmutz und Korrosion freigehalten. Gleichzeitig kann über ggf. veränderte elektrische Leistungsaufnahme der Nachstellmotoren eine beginnende Schwergängigkeit rechtzeitig erkannt und vom elektronischen Nachstellerregelsystem eine Warnanzeige erzeugt werden. Gegebenenfalls ist es vorteilhaft, diese Prüfroutine in Verbindung mit der Cleaning Funktion anzuwenden (siehe hierzu Figur 4).

Zur Sensierung des Bremsbelaggesamtverschleißes kann eine Auswertung der Decodersignale der elektrischen Antriebe des Nachstellsystems erfolgen. Durch Aufsummieren der Decoderimpulse wird der Drehwinkel der Nachstellspindeln erfasst und in eine Verschleißinformation zum Zwecke der Verschleißanzeige oder auch zum Zwecke der achsweisen Verschleißausgleichsregelung herangezogen.

Die Decodiereinrichtung der EC-Motoren gibt pro Umdrehung des Motors eine gleichbleibende Anzahl von Spannungsimpulsen ab, mindestens jedoch einen Impuls pro Umdrehung. Unter Einbeziehung des Übersetzungsverhältnisses des nachgeschalteten Getriebes und der Gewindesteigung in den Nachstellspindeln kann jedem auf- summierten Spannungsimpuls ein Zustellweg der Nachstellspindeln zugeordnet werden.

Die Decodiereinrichtung wirkt als Drehwinkelsensor der Nachstellspindeln und die Verschleißerfassung erfolgt nach einer Variante analog der bei Knorr SB/SN-Bremsen praktizierten Methode. Anstelle der Decodiereinrichtung des EC-Motors kann auch ei- ne entsprechende Einrichtung an einem der Zahnräder des nach geschalteten Getriebes angeordnet werden, die z.B. aus zwei Hallsensoren und einer magnetischen Codierung auf dem zugeordneten Zahnrad besteht. Die Decodiereinrichtung ist in jedem Fall so aufgebaut, dass zwischen Rechts- und Linkstauf des EC-Motors, d.h. zwischen Vorwärts- und Rückwärtslauf der Nachstellspindeln unterschieden wird. Die Zählimpulse bei Vorwärtslauf werden mit positivem Vorzeichen, bei Rückwärtslauf mit negativen Vorzeichen auf summiert. Auf diese Weise wird die Information über den eingetretenen Verschleiß von der Auswerteelektronik gebildet und an I Regelelektronik und/oder das Fahrer- bzw. Service-Infosystem weitergeleitet.

Bei einer Decodiereinrichtung, die z.B. drei Spannungsimpulse pro Motorumdrehung weiterleitet, einer Gesamtübersetzung des nachgeschalteten Getriebes von z.B. 700:1 und einer Gewindesteigung von z.B. 2 mm ergibt sich folgende Auflösung der Verschleißerfassung:

$C \quad = (S/i_{ges})t$

$C \quad$ = Nachstellweg pro Decodierimpuls

$S \quad$ = Steigung des Gewindes der Nachstellspindeln

$i_{ges} \quad$ = Gesamtübersetzungsverhältnis des Getriebes

$t \quad$ = Anzahl der Decodierimpulse pro Umdrehung

Mit S = 2 mm; $i_{ges}$ = 700; t = 3 ergibt sich:

$C \quad$ = 2mm/700 x 3

$C \quad$ = 0,000952 mm.

Bezugszeichenliste

| | |
|---|---|
| Bremssattel | 1 |
| Bremsscheibe | 3 |
| Bremsbelag | 5 |
| Bremsbelagträger | 5a/5b |
| Bremsbelag | 7 |
| Bremsbelagträger | 7a/7b |
| Abschnitt | 9 |
| Bolzen | 11 |
| Achsflansch | 13 |
| Nachstelleinrichtung | 15 |
| Nachstelleinrichtung | 17 |
| Nachstellhülse | 19 |
| Nachstellhülse | 19 |

Nachstellhülse              21
Druckstück                  23
Druckstück                  23
Ansatz                      24
Druckstück                  25
Druckstück                  25
Drehhebel                   27
Kolbenstange                29
Zahnrad / Ansatz            33
Zahnrad                     35
Zahnrad                     37
Zahnrad                     39
Elektromotor                41
Daten- und Versorgungsleitung   43
Steuerungseinrichtung       45

**Patentansprüche**

1. Steuerungsverfahren zum Ansteuern eines Nachstellsystems einer Scheibenbremse mit einem eine Bremsscheibe übergreifenden Bremssattel, beidseits der Bremsscheibe angeordneten Bremsbelägen, einer Zuspanneinrichtung zum Zuspannen der Scheibenbremse und dem über eine Steuereinrichtung ansteuerbaren elektromotorisch ausgelegten Nachstellsystem zum Nachstellen der Bremsbeläge bei Auftritt von Bremsbelagverschleiß, wobei das Steuerungsverfahren mit einem Programm der Steuereinrichtung ausgeführt wird und folgende Schritte aufweist:

   - Ermitteln der bei einer Bremsung auftretenden Bremsenergie,
   - Vergleich der ermittelten Bremsenergie mit einem Bremsenergiegrenzwert,
   - Ansteuern des Nachstellsystems zur Durchführung eines Nachstellens im Falle eines Überschreitens des Bremsenergiegrenzwertes.

2. Steuerungsverfahren nach Anspruch 1, **dadurch gekennzeichnet, dass** der Betrag der bei einer Bremsung umgesetzte Bremsenergie in einem Speicher zwischengespeichert und über mehrere Bremsungen hinweg aufsummiert und dann mit dem vorgespeicherten Bremsenergiegrenzwert verglichen wird.

3. Steuerungsverfahren nach Anspruch 1 oder 2, **dadurch gekennzeichnet, dass** die Bremsenergie aus dem Bremsmoment und dem Raddrehwinkel errechnet wird.

4. Steuerungsverfahren nach einem der vorstehenden Ansprüche, **dadurch gekennzeichnet, dass** der Raddrehwinkel mittels eines ABS-Systems mit einem Polradsensor ermittelt wird.

5. Steuerungsverfahren nach einem der vorstehenden Ansprüche, **dadurch gekennzeichnet, dass** das Bremsmoment aus dem Bremszylinderdruck ermittelt wird.

6. Steuerungsverfahren nach einem der vorstehenden Ansprüche, **dadurch gekennzeichnet, dass** die Bremsenergie nach folgender Formel berechnet wird:

$$MB \quad = \quad (P_z - P_{An})\, A_z i\, \varepsilon\, C^*\, r_{eff,}$$

wobei:

   $P_z$ = Druck im Bremszylinder und Anlegedruck der Bremse
   $P_{An}$ = Anlegedruck der Bremse
   I = Kraftübersetzungsverhältnis der Bremse
   $\varepsilon$ = mechanischer Wirkungsgrad des Kraftübersetzungsmechanismus der Bremse
   $C^*$ = Bremsenkennwert ~ 2 X ~B

$\mu_B$ = Reibungswert des Bremsbelages
$r_{eff}$ = wirksamer Reibradius der Bremsscheibe
Z = Anzahl der auf summierten Drehwinkelimpulse eines ABS-Polrades
$A_z$ = wirksame Kolbenfläche des Bremszylinder.

**7.** Steuerungsverfahren nach einem der vorstehenden Ansprüche, **dadurch gekennzeichnet, dass** die pro Drehung entsprechend einem Zahn eines ABS-Polrades, also die pro Drehzahlimpuls, umgesetzte Bremsenergie wie folgt ermittelt wird:

$$ w \quad = \quad (P_Z - P_{An})\,K $$

wobei:

$K = A_z\,i\,\varepsilon\,C^*\,r_{eff}\,2\pi/n;$
$P_Z$ = Druck im Bremszylinder und
$P_{An}$ = Anlegedruck der Bremse

**8.** Steuerungsverfahren nach einem der vorstehenden Ansprüche, **dadurch gekennzeichnet, dass** eine Nachstellung bei Überschreiten eines Energiegrenzwertes von 2 bis 8 MJ eingeleitet wird.

**9.** Steuerungsverfahren nach einem der vorstehenden Ansprüche, **dadurch gekennzeichnet, dass** eine Nachstellung bei Überschreiten eines Energiegrenzwertes von 5 MJ eingeleitet wird.

**10.** Steuerungsverfahren nach einem der vorstehenden Ansprüche, **dadurch gekennzeichnet, dass** die seit Inbetriebnahme des Fahrzeuges bzw. seit dem letzten Bremsbelagwechsel auf summierten Beträge der umgesetzten Bremsenergie erfasst und aufsummiert sowie mit Vorgabewerten verglichen werden, um Zustände, die zu einem überhöhten Bremsverschleiß führen, zu ermitteln und anzuzeigen und/oder zu korrigieren.

**11.** Steuerungsverfahren nach einem der vorstehenden Ansprüche, **dadurch gekennzeichnet, dass** nach einer Beendigung des Bremsvorganges die Nachstellvorrichtung im Sinne einer Lüftspielreduzierung angesteuert wird, bis der Motor beim Anliegen der Bremsbeläge an der Bremsscheibe durch die in den Nachstellspindeln entstehende Reibkraft gestoppt wird, woraufhin aus der Position ein Ansteuern in Löserichtung erfolgt, wobei eine vorgegebene Anzahl von Motorumdrehun- gen ausgeführt wird, um das Soll-Lüftspiel zu erzeugen.

**12.** Steuerungsverfahren nach einem der vorstehenden Ansprüche, **dadurch gekennzeichnet, dass** zur Reinigung der Bremsscheibe die Bremsbeläge mit dem elektrischen Verschleißnachstellsystem bei ungebremster Fahrt periodisch und/oder unter bestimmten Voraussetzungen auch fortwährend der Bremsscheibe leicht schleifende in Kontakt gebracht werden.

**13.** Steuerungsverfahren nach einem der vorstehenden Ansprüche, **dadurch gekennzeichnet, dass** das Inkontaktbringen der Bremsbeläge mit der Bremsscheibe nacheinander an den beiden einander gegenüberliegenden Bremsbelägen der Scheibenbremse erfolgt.

**14.** Steuerungsverfahren nach einem der vorstehenden Ansprüche, **dadurch gekennzeichnet, dass** die Reinigung der Bremsscheibe nach jedem Start des Fahrzeuges ausgeführt und während der Fahrt in vorgegebenen Abständen wiederholt wird.

**15.** Steuerungsverfahren nach einem der vorstehenden Ansprüche, **dadurch gekennzeichnet, dass** die Reinigung der Bremsscheibe bei Anliegen eines Nässe- und/oder Winterbetriebssignals erfolgt.

**16.** Steuerungsverfahren nach einem der vorstehenden Ansprüche, **dadurch gekennzeichnet, dass** die Reinigungsfunktion durch ein manuelles Auslösen durch den Fahrer, vorzugsweise durch Betätigung eines Schalters, oder durch Unterschreiten eines Fahrzeuggeschwindigkeitsgrenzwertes ausgelöst wird.

**17.** Steuerungsverfahren nach einem der vorstehenden Ansprüche, **dadurch gekennzeichnet, dass** der Grenzwert bei weniger als 15 km/h, vorzugsweise bei 10 km/h oder weniger liegt.

**18.** Steuerungsverfahren nach einem der vorstehenden Ansprüche, **dadurch gekennzeichnet, dass** zum Überwachen und Sichern der Schiebbarkeit der Bremsscheibe die Bremsscheibe mittels des Verschleißnachstellsystems bei rotierendem Fahrzeugrad über ihren gesamten oder teilweisen Schiebeweg hin und her verschoben wird.

**19.** Steuerungsverfahren nach einem der vorstehenden Ansprüche, **dadurch gekennzeichnet, dass** das Verschieben der Bremsscheibe periodisch erfolgt.

**20.** Steuerungsverfahren nach einem der vorstehenden Ansprüche, **dadurch gekennzeichnet, dass** durch Aufsummieren der Verschleißnachstellbewegungen des elektrischen Verschleißnachstellsystems der Gesamtbremsbelagverschleiß ermittelt wird.

**21.** Steuerungsverfahren nach Anspruch 1, **dadurch gekennzeichnet, dass** der Anlegezeitpunkt der Bremse wie folgt ermittelt wird: nach einer oder mehreren Bremsungen wird das Nachstellsystem im Sinne eines Nachstellens angesteuert, bis der wenigstens eine Nachstellmotor durch die infolge der Zuspannkraft auftretende Reibung gestoppt wird.

**22.** Steuerungsverfahren nach Anspruch 21, **dadurch gekennzeichnet, dass** der Anlegezeitpunkt des Nachstellmotors anhand einer Überwachung der Spannungs- und/oder Stromcharakteristik des Nachstellmotors beim Anlegen an die Bremsscheibe ermittelt wird.

**23.** Steuerungsverfahren nach einem der vorstehenden Ansprüche, **dadurch gekennzeichnet, dass** der Anlegezeitpunkt auf beiden Seiten der Bremsscheibe separat **dadurch** ermittelt wird, dass der Moment ermittelt wird, bis der wenigstens eine Nachstellmotor auf jeder Seite der Bremsscheibe durch die infolge der Zuspannkraft auftretende Reibung gestoppt wird.

**24.** Steuerungsverfahren nach einem der vorstehenden Ansprüche, **dadurch gekennzeichnet, dass** bei einer Ermittlung von ungleich starkem Bremsbelagverschleiß auf beiden Seiten der Bremsscheibe aufgrund einer Ermittlung ungleicher Anlegezeitpunkte das Lüftspiel auf beiden Seiten der Bremsscheibe ungleich eingestellt wird

**25.** Steuerungsverfahren zur Steuerung sämtlicher Bremsen eines Fahrzeuges oder eines Fahrzeugverbundes, **dadurch gekennzeichnet, dass** anhand der Ermittlung des Anlegezeitpunktes jeder Bremse mit einem Steuerungsverfahren nach Anspruch 21 und eines Vergleiches des Anlegezeitpunktes verschiedener Bremsen des Fahrzeuges oder eines Fahrzeugverbandes -bestehend aus Zug- und Anhängerfahrzeug -erfolgt, woraufhin die verschiedenen Bremsen des Fahrzeugs derart nachgestellt werden, dass die Anlegezeitpunkte der verschiedenen Bremsen einander angepasst werden.

**26.** Steuerungsverfahren nach Anspruch 25, **dadurch gekennzeichnet, dass** die Bremsenergie aus dem Bremsmoment und dem bei Bremsung zurückgelegten Raddrehwinkel errechnet wird.

**27.** Steuerungsverfahren nach einem der vorstehenden Ansprüche, wobei die seit Inbetriebnahme des Fahrzeugs bzw. seit dem Bremsbelagwechsel aufsummierten Beträge der umgesetzten Bremsenergie erfasst und aufsummiert und/ oder einem Fahrer mit einer Anzeigevorrichtung angezeigt werden.

**Claims**

**1.** A control process for controlling an adjusting system on a disc brake having a brake calliper which clips over a brake disc, brake pads positioned on either side of the brake disc, an application device for applying the disc brake and the adjusting system, which is driven by an electric motor and can be actuated by means of a control device, for adjusting the brake pads as brake pad wear occurs, the control process being carried out by a program in the control device and comprising the following steps:

- determination of the braking energy occurring during a braking process,
- comparison of the braking energy thus determined with a braking energy limit value,
- causing the adjusting system to perform an adjustment in the event that the braking energy limit value is exceeded.

**2.** A control process in accordance with claim 1,
**characterised in that**
the amount of braking energy used during a braking process is buffer stored in a memory and the amounts stored for a number of braking processes are added together and then compared with the pre-stored braking energy limit value.

**3.** A control process in accordance with claim 1 or 2,
**characterised in that**
the braking energy is calculated from the braking moment and the wheel rotation angle.

**4.** A control process in accordance with one of the preceding claims,
**characterised in that**
the wheel rotation angle is determined by means of an ABS system with a rotor sensor.

**5.** A control process in accordance with one of the preceding claims,
**characterised in that**
the braking moment is determined from the brake cylinder pressure.

**6.** A control process in accordance with one of the preceding claims,
**characterised in that**
the braking energy is calculated according to the following formula:

$$MB \;=\; (P_z - P_{An})\, A_z i\, \varepsilon\, C^* \, r_{eff}$$

where:

$P_z$ = pressure in brake cylinder and brake contact pressure
$P_{An}$ = brake contact pressure
i = brake power transmission ratio
$\varepsilon$ = mechanical efficiency of the brake power transmission mechanism
$C^*$ = brake characteristic ~ 2 X ~ B
$\mu_B$ = coefficient of friction of brake pad
$r_{eff}$ = effective friction radius of brake pad
Z = number of totalled ABS rotor torque angle impulses and
$A_z$ = effective piston surface of brake cylinder.

**7.** A control process in accordance with one of the preceding claims,
**characterised in that**
the braking energy used per revolution corresponding to a tooth of an ABS rotor, i.e. per speed impulse, is determined as follows:

$$w \;=\; (P_z - P_{An})\, K$$

where:

K = $A_z\, i\, \varepsilon\, C^*\, r_{eff}\, 2\pi/n$;
$P_z$ = pressure in brake cylinder and
$P_{An}$ = brake contact pressure.

**8.** A control process in accordance with one of the preceding claims,
**characterised in that**
an adjustment is made when an energy limit value of 2 to 8 MJ is exceeded.

**9.** A control process in accordance with one of the preceding claims,
**characterised in that**
an adjustment is made when an energy limit value of 5 MJ is exceeded.

**10.** A control process in accordance with one of the preceding claims,
**characterised in that**
the totalled amounts of braking energy used since the commissioning of the vehicle or the last brake pad change are measured, added together and compared with predetermined values in order to determine and indicate and/or correct conditions leading to excessive brake wear.

**11.** A control process in accordance with one of the preceding claims,
**characterised in that**
after the end of a braking process the adjusting device is caused to reduce the air gap until the motor is stopped by the friction force occurring in the adjusting spindles when the brake pads come into contact with the brake disk, upon which they are then moved from this position in the direction of release, a predetermined number of motor revolutions being carried out in order to produce the reference air gap.

**12.** A control process in accordance with one of the preceding claims,
**characterised in that**
in order to clean the brake disk the brake pads and the electric wear adjustment system are periodically and/or under certain conditions constantly brought into contact with the brake disk during unbraked operation, thereby creating a slight abrading effect.

**13.** A control process in accordance with one of the preceding claims,
**characterised in that**
opposing brake pads are brought into contact with the brake disk one after the other.

**14.** A control process in accordance with one of the preceding claims,
**characterised in that**
the cleaning of the brake disk is repeated each time the vehicle is started and at predetermined intervals during operation.

**15.** A control process in accordance with one of the preceding claims,
**characterised in that**
the cleaning of the brake disk takes place whenever a wet weather and/or winter mode signal is given.

**16.** A control process in accordance with one of the preceding claims,
**characterised in that**
the cleaning function is triggered either manually by the driver, preferably by the actuation of a switch, or when the vehicle speed falls below a vehicle speed limit value.

**17.** A control process in accordance with one of the preceding claims,
**characterised in that** the limit value is lower than 15 km/h and preferably 10 km/h or less.

**18.** A control process in accordance with one of the preceding claims,
**characterised in that**
in order to monitor and safeguard the mobility of the brake disk, the brake disk is moved back and forth along all or part of its path of travel as the vehicle wheel rotates by means of the wear adjustment system.

**19.** A control process in accordance with one of the preceding claims,
**characterised in that** the brake disk is moved periodically.

**20.** A control process in accordance with one of the preceding claims,
**characterised in that**
by adding together the wear adjustment movements of the electrical wear adjustment system it is possible to determine total brake pad wear.

**21.** A control process in accordance with claim 1,

**characterised in that**
the brake contact point is determined as follows: after one or more braking processes the adjustment system is caused to perform an adjustment until the at least one adjusting motor is stopped by the friction occurring as a result of the application force.

22. A control process in accordance with claim 21,
    **characterised in that**
    the contact point of the adjusting motor is determined by monitoring the voltage and/or current characteristic of the adjusting motor when it is in contact with the brake disk.

23. A control process in accordance with one of the preceding claims,
    **characterised in that**
    the contact point on each side of the brake disk is determined separately by determining the moment up to which the at least one adjusting motor on each side of the brake disk is stopped by the friction occurring as a result of the application force.

24. A control process in accordance with one of the preceding claims,
    **characterised in that**
    if the brake pad wear on either side of the brake disk is determined to be different on the basis of different contact points, the air gap on either side of the brake disk is set differently.

25. A control process for controlling all the brakes on a vehicle or an articulated vehicle, **characterised in that** by determining the contact point of each brake using a control process in accordance with claim 21 and comparing the contact points of different brakes in the vehicle or articulated vehicle consisting of a tractor and trailer, upon which the various brakes of the vehicle are adjusted in such a manner as to match the contact times of the various brakes to one another.

26. A control process in accordance with claim 25, **characterised in that**
    the braking energy is calculated from the braking moment and the wheel rotation angle described during braking.

27. A control process in accordance with one of the preceding claims, whereby the totalled amounts of braking energy used since the commissioning of the vehicle or the last brake pad change are measured, added together and/or displayed to a driver by means of a display device.

**Revendications**

1. Procédé de commande d'un système de rattrapage de jeu d'un frein à disque comprenant un étrier de frein surmontant un disque de frein, des garnitures de frein disposées de part et d'autre du disque de frein, un dispositif de serrage pour produire le serrage du frein à disque, et le dispositif de rattrapage de jeu à moteur électrique, qui peut être commandé par l'intermédiaire d'un dispositif de commande, et qui est destiné à produire un réglage de rattrapage de jeu des garnitures de frein lors de l'apparition d'une usure des garnitures de frein, le procédé de commande étant exécuté à l'aide d'un programme du dispositif de commande et présentant les étapes suivantes :

   - détermination de l'énergie de freinage apparaissant au cours d'un freinage,
   - comparaison de l'énergie de freinage déterminée avec une valeur de seuil d'énergie de freinage,
   - commande du système de rattrapage de jeu pour effectuer un réglage de rattrapage de jeu dans le cas d'un dépassement de la valeur de seuil d'énergie de freinage.

2. Procédé de commande selon la revendication 1, **caractérisé en ce que** la valeur de l'énergie de freinage transformée au cours d'un freinage est mémorisée temporairement dans une mémoire, et cumulée sur plusieurs freinages, et est ensuite comparée à la valeur de seuil d'énergie de freinage mémorisée au préalable.

3. Procédé de commande selon la revendication 1 ou 2, **caractérisé en ce que** l'énergie de freinage est calculée à partir du couple de freinage et de l'angle de rotation de roue.

4. Procédé de commande selon l'une des revendications précédentes, **caractérisé en ce que** l'angle de rotation de roue est déterminé au moyen d'un système ABS avec un capteur à roue polaire.

**5.** Procédé de commande selon l'une des revendications précédentes, **caractérisé en ce que** le couple de freinage est déterminé à partir de la pression dans le cylindre de frein.

**6.** Procédé de commande selon l'une des revendications précédentes, **caractérisé en ce que** l'énergie de freinage est calculée d'après la formule suivante :

$$MB = (P_Z - P_{An}) A_Z i \varepsilon C^* r_{eff},$$

avec :

P$_Z$ = pression dans le cylindre de frein et pression d'application du frein
P$_{An}$ = pression d'application du frein
i rapport de démultiplication de forces du frein
$\varepsilon$ = rendement mécanique du mécanisme de transmission des forces du frein
C* = valeur caractéristique du frein $\approx 2\mu_B$
$\mu_B$ = coefficient de frottement de la garniture de frein
r$_{eff}$ = rayon de frottement efficace ou actif du disque de frein
Z = nombre des impulsions d'angle de rotationcumulées d'une roue polaire ABS
AZ = surface de piston active ou efficace ducylindre de frein.

**7.** Procédé de commande selon l'une des revendications précédentes, **caractérisé en ce que** l'énergie de freinage transformée par rotation correspondant à une dent d'une roue polaire ABS, donc par impulsion de vitesse de rotation, est déterminée de la manière suivante :

$$w = (P_Z - P_{An}) K$$

avec :

K = A$_Z$i$\varepsilon$C*r$_{eff}$ 2$\pi$/n,
P$_Z$ = pression dans le cylindre de frein, et
P$_{An}$ = pression d'application du frein.

**8.** Procédé de commande selon l'une des revendications précédentes, **caractérisé en ce qu'**on fait débuter un réglage de rattrapage de jeu en cas de dépassement d'une valeur de seuil d'énergie de 2 à 8 MJ.

**9.** Procédé de commande selon l'une des revendications précédentes, **caractérisé en ce qu'**on fait débuter un réglage de rattrapage de jeu est initié en cas de dépassement d'une valeur de seuil d'énergie de 5 MJ.

**10.** Procédé de commande selon l'une des revendications précédentes, **caractérisé en ce que** les valeurs de l'énergie de freinage transformée, cumulées depuis la mise en service du véhicule ou depuis le dernier changement des garnitures de frein, sont relevées et cumulées ainsi que comparées à des valeurs prescrites, en vue de déterminer et indiquer et/ou corriger des états qui conduisent à une usure excessive des freins.

**11.** Procédé de commande selon l'une des revendications précédentes, **caractérisé en ce qu'**après un achèvement de la phase de freinage, le dispositif de rattrapage de jeu est commandé dans le sens d'une réduction du jeu de desserrage jusqu'à ce que le moteur, lors de l'application des garnitures de frein sur le disque de frein, soit arrêté par la force de friction engendrée dans les vis de réglage de rattrapage de jeu, à la suite de quoi on produit, à partir de cette position, une commande dans le sens d'un desserrage, un nombre prescrit de tours de rotation du moteur étant effectué en vue d'engendrer le jeu de desserrage de consigne.

**12.** Procédé de commande selon l'une des revendications précédentes, **caractérisé en ce que** pour le nettoyage du disque de frein, les garnitures de frein sont amenées en contact légèrement frottant avec le disque de frein à l'aide du système électrique de rattrapage d'usure, lors d'une marche non freinée, de manière périodique et/ou dans des conditions déterminées ou également de manière continue.

**13.** Procédé de commande selon l'une des revendications précédentes, **caractérisé en ce que** la mise en contact des garnitures de frein avec le disque de frein s'effectue successivement sur les deux garnitures de frein opposées du frein à disque.

**14.** Procédé de commande selon l'une des revendications précédentes, **caractérisé en ce que** le nettoyage du disque de frein est effectué après chaque démarrage du véhicule, et est répété pendant la marche, selon des intervalles prescrits.

**15.** Procédé de commande selon l'une des revendications précédentes, **caractérisé en ce que** le nettoyage du disque de frein est effectué en présence d'un signal de fonctionnement en milieu humide et/ou hivernal.

**16.** Procédé de commande selon l'une des revendications précédentes, **caractérisé en ce que** la fonction de nettoyage est déclenchée par un actionnement manuel par le conducteur, de préférence par actionnement d'un commutateur, ou bien par le passage en dessous d'une valeur de seuil de vitesse du véhicule.

**17.** Procédé de commande selon l'une des revendications précédentes, **caractérisé en ce que** la valeur de seuil se situe à moins de 15 km/h, de préférence à 10 km/h ou moins.

**18.** Procédé de commande selon l'une des revendications précédentes, **caractérisé en ce que** pour surveiller et garantir la possibilité de coulissement du disque de frein, on fait coulisser en va-et-vient le disque de frein sur la totalité ou une partie de sa course de coulissement, au moyen du système de rattrapage d'usure, lorsque la roue du véhicule est en rotation.

**19.** Procédé de commande selon l'une des revendications précédentes, **caractérisé en ce que** le coulissement du disque de frein se fait de manière périodique.

**20.** Procédé de commande selon l'une des revendications précédentes, **caractérisé en ce que** grâce au cumul des mouvements de réglage de rattrapage d'usure du système électrique de rattrapage d'usure, on détermine l'usure totale des garnitures de frein.

**21.** Procédé de commande selon la revendication 1, **caractérisé en ce que** l'instant d'application du frein est déterminé de la manière suivante : après un ou plusieurs freinages, on commande le système de rattrapage de jeu dans le sens d'un réglage de rattrapage de jeu jusqu'à ce que ledit au moins un moteur de rattrapage de jeu soit arrêté par le frottement apparaissant suite à la force de serrage.

**22.** Procédé de commande selon la revendication 21, **caractérisé en ce que** l'instant d'application du moteur de rattrapage de jeu est déterminé au moyen d'un contrôle de la caractéristique de tension et/ou de courant du moteur de rattrapage de jeu lors de l'application sur le disque de frein.

**23.** Procédé de commande selon l'une des revendications précédentes, **caractérisé en ce que** l'instant d'application est déterminé de manière séparée des deux côtés du disque de frein, en déterminant le couple jusqu'à ce que ledit au moins un moteur de rattrapage de jeu sur chaque côté du disque de frein soit arrêté par le frottement apparaissant suite à la force de serrage.

**24.** Procédé de commande selon l'une des revendications précédentes, **caractérisé en ce que** lors d'une détermination d'une usure de garniture de frein d'ampleur inégale sur les deux côtés du disque de frein en raison d'une détermination d'instants d'application différents, on règle le jeu de façon inégale sur les deux côtés du disque de frein.

**25.** Procédé de commande pour commander l'ensemble des freins d'un véhicule ou d'un train de véhicules, **caractérisé en ce que** l'on effectue une détermination de l'instant d'application de chaque frein à l'aide d'un procédé de commande selon la revendication 21 et une comparaison de l'instant d'application de différents freins du véhicule ou d'un train de véhicules constitué d'un véhicule tracteur et d'un véhicule remorque, puis on réalise un réglage de rattrapage de jeu des différents freins du véhicule de manière à ce que les instants d'application des différents freins soient adaptés les uns aux autres.

**26.** Procédé de commande selon la revendication 25, **caractérisé en ce que** l'énergie de freinage est calculée à partir du couple de freinage et de l'angle de rotation de roue couvert lors du freinage.

27. Procédé de commande selon l'une des revendications précédentes, d'après lequel les valeurs de l'énergie de freinage transformée, cumulées depuis la mise en service du véhicule ou depuis le changement de garnitures de frein, sont relevées et cumulées et/ou indiquées à un conducteur à l'aide d'un dispositif indicateur.

## Fig. 1

Ansteuerungsroutine
" Lüftspiel Einstellen, Ansprechzeitpunkt Erkennen, Verschleißzustand Erfassen "

100 — Bremsbetätigungssignal durch CAN Bus gesendet? → nein
ja

101 — Befehl zur Nachstellung durch CAN Bus gesendet?
( Bremsenergie > 5MJ / Ansprechzeiterfassung notwendig ) → nein
ja

102 — EC Motoren ansteuern zum Verdrehen der Nachstellspindeln
In Richtung " Lüftspiel verkleinern "

103 — EC Motoren bei voller Betriebsspannung gestoppt? → nein
ja

104 — Stop Meldung an EBS senden

105 — EC Motoren stromlos schalten

106 — Bremslösesignal durch CAN Bus gesendet? → nein
ja

107 — EC Motoren ansteuern zum Verdrehen der Nachstellspindeln
In Richtung " Lüftspiel verkleinern "

108 — EC Motoren bei voller Betriebsspannung gestoppt? → nein
ja

109 — EC Motor um x- Decoderimpulse in Richtung
" Lüftspiel vergrößern ansteuern"

110 — x- Decodierimpulse erreicht? → nein
ja

111 — Betrag der aufsummierte Decodierimpulse an
EBS Verschleißwertspeicher 5N melden

Stop

# Fig.2

Berechnungsroutine zur Ermittlung der umgesetzten Bremsenergie

```
                        ┌─────────┐
                        │  Start  │
                        └─────────┘
                            │ ja              ◄──────────────────┐
                            │                                     │
201 ──◄  Bremsbetätigungssignal durch CAN Bus gesendet?  ►──      │
                            │ ja              nein   ◄──────────┐ │
                            │                                   │ │
202 ──◄          Drehimpuls erhalten?                  ►──      │ │
                            │                    nein           │ │
                            │                                   │ │
203 ──┤ Bremsdrucksignal erfassen und in SP speichern │         │ │
                            │                                   │ │
      ┌──────────────────────────────────────────────┐         │ │
204 ──┤  Betrag PAN von Betrag SP subtrahieren        │         │ │
      │  und Ergebnis in SPP speichern                │         │ │
      └──────────────────────────────────────────────┘         │ │
                            │                                   │ │
      ┌──────────────────────────────────────────────┐         │ │
205 ──┤  Betrag SPP mit K multiplizieren und          │         │ │
      │  und Ergebnis in SW speichern                 │         │ │
      └──────────────────────────────────────────────┘         │ │
                            │                                   │ │
      ┌──────────────────────────────────────────────┐         │ │
206 ──┤  Betrag aus Summenwertspeicher SWS            │         │ │
      │  abfragen und speichern                       │         │ │
      └──────────────────────────────────────────────┘         │ │
                            │                                   │ │
207 ──┤  Betrag aus SW zu Betrag aus SWS addieren   │           │ │
                            │                                   │ │
208 ──┤  Betrag in SWS durch Ergebnis SW + SWS ersetzen │       │ │
                            │                                   │ │
      │ Neuen Wert SWS an Verschleißüberwachung senden │        │ │
                            │                                   │ │
209 ──◄          SWS > WGRENZ ?          ►──── nein ─────────────┘ │
                            │ ja                                   │
                            │               ◄──────────────────────┘
210 ──◄  Bremslösesignal durch CAN Bus gesendet ?  ►──── nein
                            │ ja
211 ──┤ Nachstellbefehl an Nachstellersteuerung senden │
                            │
212 ──┤ Speicher SWS auf Null setzen │
                            │
                        ┌─────────┐
                        │  Stop   │
                        └─────────┘
```

## Fig.3

Prüfroutine Verschleißüberwachung

Start

301 — Signal für Motorstart erhalten ?  nein

ja

302 — SWS Betrag aus Bremsenergieermittlung
lesen und speichern

303 — Betrag aus Gesamtbremsenergiespeicher SWG
lesen und speichern

304 — Betrag aus SWS zu SWG hinzuaddieren

305 — Betrag in SWG durch Ergebnis SWS + SWG ersetzen

306 — Betrag Verschleißdecodierung von Nachstellersteuerung
lesen und speichern

307 — Betrag SN mit Nachstellkonstante C multiplizieren
und in SNC speichern

308 — Betrag aus SNC durch Betrag aus SWG dividieren und
Ergebnis in SV speichern

309 — Ergebnis SV an Infosystem senden

Stop

# Fig.4

Ansteuerungsroutine " Cleaning Function und Sicherung der Schiebbarkeit "

```
                        ┌─────────┐
                        │  Start  │
                        └─────────┘
                             │
       ┌─────────────────────────────────────────────────┐
401 ───┤      Bremslösesignal durch CAN Bus gesendet ?    ├──── nein
       └─────────────────────────────────────────────────┘
                             │ ja
       ┌─────────────────────────────────────────────────┐
 nein ─┤     Wartezeit seit letztem cleaning Vorgang > TW ? ├──
       └─────────────────────────────────────────────────┘
402                          │ ja
       ┌─────────────────────────────────────────────────┐
403 ───┤      Raddrehzahlsignal lesen und speichern in SNC │
       └─────────────────────────────────────────────────┘
                             │
                 ┌───────────────────────┐
                 │      SNC < NCmin ?     │
                 └───────────────────────┘
                             │ ja
       ┌─────────────────────────────────────────────────┐
404 ───┤   EC Motor Außen Ansteuern zur Verdrehung der     │
       │   Nachstellspindeln in Richtung Lüftspiel vergrößern │
       └─────────────────────────────────────────────────┘
                             │
       ┌─────────────────────────────────────────────────┐
405 ───┤   EC Motor Innen Ansteuern zur Verdrehung der     │
       │   Nachstellspindeln in Richtung Lüftspiel verkleinern │
       └─────────────────────────────────────────────────┘
                             │
       ┌─────────────────────────────────────────────────┐
406 ───┤       K Decodierimpulse Motor Außen              ├──── nein
       │       und Motor Innen erreicht ?                 │
       └─────────────────────────────────────────────────┘
                             │ ja
       ┌─────────────────────────────────────────────────┐
407 ───┤   EC Motor Außen Ansteuern zur Verdrehung der     │
       │   Nachstellspindeln in Richtung Lüftspiel verkleinern │
       └─────────────────────────────────────────────────┘
                             │
       ┌─────────────────────────────────────────────────┐
408 ───┤   EC Motor Innen Ansteuern zur Verdrehung der     │
       │   Nachstellspindeln in Richtung Lüftspiel vergrößern │
       └─────────────────────────────────────────────────┘
                             │
       ┌─────────────────────────────────────────────────┐
409 ───┤       K Decodierimpulse Motor Außen              ├──── nein
       │       und Motor Innen erreicht ?                 │
       └─────────────────────────────────────────────────┘
                             │ ja
                 ┌───────────────────────┐       nein   ┌──────┐
410 ─────────────┤  Off Road Taste geschaltet ? ├────────│ Stop │
                 └───────────────────────┘              └──────┘
                             │ ja
```

# Fig.5a Bl. 1

Ansteuerungsroutine Blatt 1
"Individuelle Lüftspieleinstellung, Ansprechzeitpunkt erkennen, Verschleißzustand erfassen "

Start

501 — Bremsbetätigungssignal durch CAN Bus gesendet? — nein

ja

502 — Befehl zur Nachstellung durch CAN Bus gesendet?
( Bremsenergie > 5MJ / Ansprechzeiterfassung notwendig ) — nein

ja

503 — EC Motor A und EC Motor I ansteuern zum Verdrehen
der Nachstellspindeln in Richtung Lüftspiel verkleinern

504 — EC Motoren A und I bei voller Betriebsspannung gestoppt? — nein

ja

505 — Stop Meldung an EBS senden

506 — EC Motoren stromlos schalten

507 — Bremslösesignal durch CAN Bus gesendet? — nein

ja

508 — EC Motor A und I ansteuern zur Verdrehung der
Nachstellspindeln in Richtung Lüftspiel verkleinern

509 — EC Motoren A und I bei voller Betriebsspannung gestoppt? — nein

ja

510 — Betrag Verschleißdecodierung Belag Innen von Verschleißwertspeicher SNI lesen

511 — Betrag SNI mit Nachstellerkonstante c multiplizieren und in SNCI speichern

512 — Betrag Verschleißdecodierung Belag Außen von Verschleißwertspeicher SNA lesen

513 — Betrag SNA mit Nachstellerkonstante c multiplizieren und in SNCA speichern

weiter Blatt 2

# Fig.5a Bl. 2

Ansteuerungsroutine Blatt 2
"Individuelle Lüftspieleinstellung, Ansprechzeitpunkt erkennen, Verschleißzustand erfassen "

von Blatt 1

514 — SNCA von SNCI subtrahieren

515 — SNCA - SNCI > d ?

nein

ja

516 — 0 > (SNCA - SNCI) > 0 ?

ja     nein

**EC Motoren A und I um x Decodierimpulse in Richtung Lüftspielvergrößerung ansteuern**

516

517

**EC Motor A um (x + b) Decodierimpulse in Richtung Lüftspielvergrößerung ansteuern** — 517

**EC Motor A um (x - b) Decodierimpulse in Richtung Lüftspielvergrößerung ansteuern** — 517'

518

**EC Motor I um (x - b) Decodierimpulse in Richtung Lüftspielvergrößerung ansteuern** — 518

**EC Motor I um (x + b) Decodierimpulse in Richtung Lüftspielvergrößerung ansteuern** — 518'

nein

x Decodierimpulse von Motor A und I erreicht ?

ja

nein — (x + b) Decodierimpulse von Motor A erreicht ? — 519

nein — (x - b) Decodierimpulse von Motor I erreicht ? — 519'

ja

ja    nein — (x - b) Decodierimpulse von Motor A erreicht ? — 520

ja    nein — (x + b) Decodierimpulse von Motor I erreicht ? — 520'

518

**Betrag der aufsummierten Decodierimpulse an EBS Verschleißwertspeicher SNA und SNI melden**

ja — 521

**Betrag der aufsummierten Decodierimpulse an EBS Verschleißwertspeicher SNA und SNI melden**

ja — 521'

**Betrag der aufsummierten Decodierimpulse an EBS Verschleißwertspeicher SNA und SNI melden**

Stop

25

# Fig.6

Ansteuerungsroutine " Aktives Zurückstellen der Bremsscheibe "

```
                    ┌─────────┐
                    │  Start  │
                    └─────────┘
                         │
              ◄──────────┼──────────────────────────────────◄
       ╱────────────────────────────────────────────╲
      ◄   Bremslösesignal durch CAN Bus gesendet ?    ►──────►
       ╲────────────────────────────────────────────╱      nein
  601                    │
                      ja │
       ┌────────────────────────────────────────────┐
       │ EC Motor A ansteuern zur Verdrehung der     │
       │ Nachstellspindeln um f Decoderimpulse       │
  602  │ in Richtung Lüftspiel verkleinern           │
       └────────────────────────────────────────────┘
                         │
       ┌────────────────────────────────────────────┐
       │ EC Motor I ansteuern zur Verdrehung der     │
  603  │ Nachstellspindeln um f Decoderimpulse       │
       │ in Richtung Lüftspiel vergrößern            │
       └────────────────────────────────────────────┘
                         │
              ◄──────────┼──────────────────────────────────◄
       ╱────────────────────────────────────────────╲
      ◄   f Decoderimpulse von Motor A und I erreicht ? ►─────►
       ╲────────────────────────────────────────────╱      nein
  604                    │
                      ja │
       ┌────────────────────────────────────────────┐
       │ EC Motor A ansteuern zur Verdrehung der     │
  605  │ Nachstellspindeln in Richtung Lüftspiel     │
       │ vergrößern um f Decoderimpulse              │
       └────────────────────────────────────────────┘
                         │
       ┌────────────────────────────────────────────┐
       │ EC Motor I ansteuern zur Verdrehung der     │
  606  │ Nachstellspindeln in Richtung Lüftspiel     │
       │ verkleinern um f Decoderimpulse             │
       └────────────────────────────────────────────┘
                         │
              ◄──────────┼──────────────────────────────────◄
       ╱────────────────────────────────────────────╲
      ◄   f Decoderimpulse von Motor A und I erreicht ? ►─────►
       ╲────────────────────────────────────────────╱      nein
  607                    │
                      ja │
                    ┌─────────┐
                    │  Stop   │
                    └─────────┘
```

Fig.7

Fig.8